(19) Europäisches Patentamt
European Patent Office
Office européen des brevets

(11) EP 1 072 165 B1

(12) EUROPÄISCHE PATENTSCHRIFT

(45) Veröffentlichungstag und Bekanntmachung des Hinweises auf die Patenterteilung:
**20.07.2005 Patentblatt 2005/29**

(21) Anmeldenummer: **00907552.4**

(22) Anmeldetag: **11.02.2000**

(51) Int Cl.[7]: **H04Q 7/38**

(86) Internationale Anmeldenummer:
**PCT/EP2000/001136**

(87) Internationale Veröffentlichungsnummer:
**WO 2000/048418 (17.08.2000 Gazette 2000/33)**

(54) **VERFAHREN ZUR ERKENNUNG VON MISSBRÄUCHEN VON DIENSTLEISTUNGEN DES NETZBETREIBERS MITTELS ONLINE-ANALYSE VON KUNDENBEZOGENEN DATENSÄTZEN**

METHOD FOR DETECTING CUSTOMER-RELATED ABUSE OF SERVICES OF THE NETWORK OPERATOR BY ONLINE ANALYSIS OF CUSTOMER-RELATED DATA SETS

PROCEDE PERMETTANT DE RECONNAITRE UN EMPLOI NON AUTORISE PAR DES CLIENTS DE SERVICES FOURNIS PAR UN EXPLOITANT DE RESEAU PAR ANALYSE EN LIGNE D'ENSEMBLES DE DONNEES RELATIFS AUX CLIENTS

(84) Benannte Vertragsstaaten:
**AT BE CH CY DE DK ES FI FR GB GR IE IT LI LU MC NL PT SE**

(30) Priorität: **11.02.1999 DE 19905884**

(43) Veröffentlichungstag der Anmeldung:
**31.01.2001 Patentblatt 2001/05**

(73) Patentinhaber: **T-Mobile Deutschland GmbH**
**53227 Bonn (DE)**

(72) Erfinder:
- **HAGER, Rolf**
  **D-53424 Remagen-Oedingen (DE)**
- **MATHAR, Rudolf**
  **D-52072 Aachen (DE)**
- **HELLEBRANDT, Martin**
  **47608 Geldern (DE)**
- **TÖX, Reinhold**
  **53225 Bonn (DE)**

(74) Vertreter: **Riebling, Peter, Dr.-Ing.**
**Patentanwalt**
**Postfach 31 60**
**88113 Lindau (DE)**

(56) Entgegenhaltungen:
**EP-A- 0 891 069** **WO-A-97/03533**

- **POSTON W L ET AL: "Recursive dimensionality reduction using Fisher's linear discriminant" PATTERN RECOGNITION,US,PERGAMON PRESS INC. ELMSFORD, N.Y, Bd. 31, Nr. 7, 1. Juli 1998 (1998-07-01), Seiten 881-888, XP004122605 ISSN: 0031-3203**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 072 165 B1

## Beschreibung

Die Erfindung betrifft ein Verfahren nach dem Oberbegriff des Anspruchs 1, sowie eine Datenverarbeitungsvorrichtung zur Ausführung des Verfahrens.
Es sind zwar bereits schon Verfahren der eingangs genannten Art bekannt geworden, diese litten aber unter dem Nachteil, daß sie langsam und ungenau arbeiteten und relativ häufig unerwünschten Fehlalarm erzeugten.

Die WO 97 / 03533 A1 offenbart eine Anordnung für die Erkennung des betrügerischen Gebrauchs eines Mobiltelefons durch einen Telefonteilnehmer eines Mobilfunknetzes. Die Anordnung umfasst einen Eingangsprozessor, ein neuronales Netz verbunden mit dem Eingangsprozessor, und ein Ausgangsnachbearbeitungsprogramm, das mit dem neuronalen Netz verbunden ist. Der Eingangsprozessor ermittelt für jeden Teilnehmer ein erstes Langzeit-Anrufprofil, eine zweites Kurzzeit-Anrufprofil und ein Teilnehmerprofilmuster, das den Unterschied zwischen dem ersten und zweiten Profil enthält. Jedes Anrufprofil- und Teilnehmerprofilmuster enthält einen Satz von Werten für einen jeweiligen Satz von Anrufattributen. Das neuronalen Netz enthält ein Selbstorganisierendes Diagramm, das ausgebildet ist, um eine Mustererkennung der Teilnehmerprofilmuster und ein mehrschichtigen Perzeptron das für jedes erkannte Muster einen Wert ermittelt, der auf die Wahrscheinlichkeit eines Betrugs betreffend das zugehörige Muster hinweist.

Der Erfindung liegt deshalb die Aufgabe zugrunde, eine wesentlich höhere Detektionswahrscheinlichkeit für Mißbraucher gegenüber existierenden Verfahren zu schaffen, wobei eine kleinere Wahrscheinlichkeit für einen Fehlalarm (fälschlich verdächtigter Normalkunde) gegenüber existierenden Verfahren ereicht werden soll.

Zur Lösung der gestellten Aufgabe dient die im Anspruch 1 wiedergegebene technische Lehre. Weitere Ausgestaltungen und Abwandlungen des Erfindungsgedankens sind Gegenstand der Unteransprüche.

In der vorliegenden Erfindungsbeschreibung werden Datensätze eines Mobilnetz-Betreibers zum Benutzerverhalten im Mobilfunknetz in solche für ehrliche Kunden und solche mit betrügerischen Absichten auf der Basis stochastischer Modelle logisch und datentechnisch zerlegt. Über die in MEGS implementierten, eindimensionalen Filter hinaus werden Verfahren zur rechnergestützten Betrugserkennung entwickelt.

- -- Mit Hilfe der Hauptkomponentenanalyse wird ein graphisches Werkzeug angeboten, mit dem durch zweidimensionale Plots und entsprechende Färbung Daten von Betrügern leicht identifiziert werden können. Dies geschieht durch visuelle Inspektion oder einen automatischen, rechnerinternen Test.
- -- Auf der Basis der Fisher'schen Diskriminanzanalyse wird ein automatischer Test vorgeschlagen, der simultan aus den hochdimensionalen Datensätzen solche identifiziert, die zu Betrügern gehören.

Beide Verfahren zeichnen sich bei geringem Rechenaufwand durch kleine Fehlerwahrscheinlichkeiten 1. und 2. Art aus. Dies bedeutet eine hohe Detektionswahrscheinlichkeit bei einer geringen Anzahl von Fehlalarmen.

Das Verfahren besteht im wesentlichen aus folgenden Schritten, die programm-gesteuert in einer Datenverarbeitungsanlage durchgeführt werden:

a) Erfassung der Eingabedatensätze aus den folgenden Komponenten:

i) kumulierte Datensätze über einen festen Zeitraum, z. B. 30-Tage-Datensätze;
ii) Einzelverbindungsdaten der letzten datenschutzrechtlich genehmigten Dauer in Tagen (z. Zt. 5 Tage): Zielrufnummer, Gesprächsdauer, Verbindungsart etc.;
iii) kundenspezifische Daten (Kundenalter im Netz, Zahlungsart etc.).

b) Akkumulierung der Eingabemerkmale nach Klassen (Zielrufnummertyp, Gesprächsanzahlen, Gesprächsarten etc.):

Jeder Datensatz aus akkumulierten Daten wird durch einen hochdimensionalen reellen Vektor dargestellt.

c) Durchführung der Hauptkomponentenanalyse:

i) Durchführung einer Hauptkomponentenanalyse auf Datensätzen von bereits erkannten Betrügern;
ii) Spektralzerlegung der zugehörigen Kovarianzmatrix;
iii) Bestimmung der relevanten Hauptkomponenten;
iiii) Klassifizierung der für Betrugsverhalten relevanten Hauptkomponenten.

d) Hauptkomponententransformation der nichtdetektierten Datensätze auf der Basis der Spektralzerlegung der Kovarianzmatrix in Schritt c).

e) (Evtl. graphische) Darstellung der Hauptkomponenten von Datensätzen und (evtl. visuelle) Diskrimination bzgl. des Betrugsverhaltens.

f) Schätzung und Ermittlung der empirischen Quantile der Hauptkomponenten zur Steuerung der Fehlerwahrscheinlichkeiten erster und zweiter Art bei automatischer Detektion und Alarmgenerierung.

g) Fisher'sche Diskriminanzanalyse zur Bestimmung einer trennenden Hyperebene zwischen Datensätzen von identifizierten Betrügern und Normalkunden mit graphischer Darstellung.

h). Schätzung und Ermittlung der empirischen Quantile der projizierten Daten zur Steuerung der Fehlerwahrscheinlichkeiten 1. und 2. Art bei automatischer Detektion und Alarmgenerierung.

Die Vorteile des erfindungsgemäßen Verfahrens sind wie folgt

- einfache Berechenbarkeit unter Realzeitbedingungen: notwendig sind lediglich Vektoradditionen, Multiplikation und Matrizeninversion;
- Verfahren ist unabhängig von Rechner- und Protokollarchitekturen;
- Verfahren beinhaltet die Möglichkeit eines automatischen, rechnerinternen Tests auf Betrugsabsicht mit nachfolgendem automatischen Alarm;
- zu Mißbrauchern korrespondierende Datensätze können zum Zweck der Detektion graphisch dargestellt werden: optische Unterscheidbarkeit;
- Verfahren lernt aus vergangenen Datensätzen, aktuelle Datensätze können damit besser zu diskriminiert werden;
- Verfahren ist adaptionsfähig an neue Betrugsprofile.

Problemstellung

Ziel dieser Erfindung ist die frühzeitige Erkennung von Betrugsabsichten seitens der Nutzer von Mobilfunknetzen. Dadurch sollen finanzielle Ausfälle für den Betreiber begrenzt werden. Betrachtet werden dabei nicht nur Fälle von vorsätzlichem Mißbrauch, sondern auch solche, in denen abzusehen ist, daß der Teilnehmer nicht in der Lage sein wird, seine Telefonkosten zu tragen. Zwischen diesen beiden verschiedenen Aspekten wird innerhalb dieser Arbeit nicht weiter sprachlich unterschieden.

Das Verhalten der Teilnehmer und die Feststellung einer möglichen Betrugsabsicht werden mit Hilfe statistischer Methoden und Modelle charakterisiert. Zu diesem Zweck werden die Datenbestände benutzt, die zur Abrechnung von Gesprächen seitens der Netzbetreiber erfaßt werden. Hierbei handelt es sich um Teilnehmerdaten, deren Informationen sich auf einen Zeitraum von 80 Tagen beziehen. In diesen sogenannten 80-Tage-Datensätzen finden sich Informationen über die einzelnen Tagesgesamtumsätze der Kunden, die Tagesumsätze bei internationalen und Roaming-Verbindungen, sowie die Klassenzugehörigkeit des Teilnehmers, die sein Alter im Netz, also die Dauer seiner Netzzugehörigkeit widerspiegelt. Zu Testzwecken wurden 80-Tage-Datensätze der Kundensegmente 19 und 28 untersucht, das heißt von Kunden, deren Mobilfunknummer mit 19 oder 28 anfängt.

Desweiteren stehen Einzelverbindungsdaten der Kunden zur Verfügung, aus denen sich die jeweiligen Zielrufnummern, der Beginn, die Dauer und die Kosten des Gespräches sowie weitere Informationen, wie etwa die Zelle, aus der das Telefonat geführt wurde, ablesen lassen. Natürlich sind dabei aus Gründen des Datenschutzes die persönlichen Daten des Teilnehmers, wie seine MSISDN Nummer und die Zielrufnummer entweder verschlüsselt oder verkürzt worden. Die Einzelverbindungsdaten beziehen sich auf die Teilnehmersegmente 19, 28, 30 und 31 und erstrecken sich jeweils über einen Zeitraum von einer Woche. Die Segmente 30 und 31 wurden speziell ausgesucht, da es sich um bereits sehr lange bestehende Kundensegmente handelt, die gut das Verhalten von Teilnehmern ohne Betrugsabsichten widerspiegeln. Die beschriebenen Teilnehmerdaten, die dieser Arbeit zugrunden liegen, teilen sich auf in Informationen, die zu Kunden ohne Betrugsabsichten gehören und Daten von bereits durch den Netzbetreiber erkannten und gesperrten Betrügern.

Zur Verhaltensanalyse von Teilnehmern mit und ohne Betrugsabsicht werden im ersten Teil des Berichts statistische Modelle entwickelt, mit deren Hilfe verschiedene, für die Betrugserkennung wichtige Aspekte des Kundenverhaltens ausgedrückt werden können.

Da sich das Anrufverhalten von Kunden mit Betrugsabsicht als zu inhomogen für eine gemeinsame Behandlung darstellt, werden solche Kunden anhand ihrer Gesprächsmerkmale klassifiziert. Für jede dieser Klassen werden Möglichkeiten zur Erkennung angegeben. Die Einteilung erfolgt dabei anhand des Verhaltens, das eine bestimmte Gruppe von Teilnehmern mit Betrugsabsicht auszeichnet und das sich vom individuellen Verhalten der übrigen Teilnehmer signifikant unterscheidet. Hierbei kommen Methoden der multivarianten Statistik und Diskriminanzanalyse zum Einsatz. Diese ermöglichen es, das Verhalten von Kunden mit Betrugsabsicht durch nur zwei Merkmale genau

zu beschreiben und Tests anzugeben, die auf diesen Merkmalen beruhen.

Im letzten Teil der Untersuchungen werden bestimmte Filter aus dem Mißbrauchserkennungssystem MEGS hinsichtlich ihrer Güte, das heißt ihrer Fehlerwahrscheinlichkeiten zur Erkennung von Betrügern bewertet. Die Angaben hierzu beziehen sich auf die zur Verfügung gestellten empirischen Daten, die mit dem MEGS System gesammelt wurden.

Modellbildung

Zur Untersuchung des Verhaltens von Teilnehmern mit und ohne Betrugsabsicht werden charakteristische Größen der Tagesumsatzverteilungen bestimmt. Anschließend werden die Klassenzugehörigkeiten in den zugrundeliegenden Teilnehmersegmenten 19 und 28 auf ihrer Verwertbarkeit hin untersucht. Weiterhin werden die zur späteren Analyse der MEGS Filter benötigten empirischen Verteilungsfunktionen und Zähldichten bestimmt. Verteilung der Tagesumsätze

Die Tagesumsätze der beiden betrachteten Teilnehmergruppen werden als Realisationen unkorrelierter Zufallsvariablen $X_e$ für Normalkunden und $X_b$ für Betrüger angesehen. Wichtige charakteristische Merkmale der beiden Verteilung sind gegeben durch den empirischen Mittelwert und die empirische Varianz der Beobachtungen. Eine Aufstellung der ermittelten Größen findet sich in der folgenden Tabelle.

| | Normalkunden | Betrüger |
|---|---|---|
| Erwartungswert | 205.88 | 11738.1 |
| Varianz | 378174 | 8.95e+08 |

Für die Segmente 19 und 28 liegen 80-Tage-Datensätze vor, aus denen die empirischen Mittelwerte der Tagesgesamtumsätze für die beiden Segmente noch einmal berechnet werden. Dabei wird im Gegensatz zur obigen Berechnung der Werte aus den Einzelverbindungsdaten auch berücksichtigt, ob ein Teilnehmer überhaupt an einem Tag telefoniert. In folgender Tabelle sind die entsprechenden Werte und die Beobachtungszahlen aufgeführt.

| | Segment 19... | Segment 28... |
|---|---|---|
| Erwartungswert | 0.22539 | 1.3335 |
| Anz. der Beobachtungen | 512703 | 5876000 |

Der auffallende Unterschied in den Parameterschätzungen zwischen den Segmenten 19 und 28 läßt sich dadurch erklären, daß es sich bei Segment 19 um ein ganz neues Teilnehmersegment handelt, in dem erst zum Zeitpunkt des 11. Juli 1998 eine erste Nutzung stattfand. Weiterhin läßt sich bemerken, daß viele neue Teilnehmer dieses Segmentes erst nach dem 11. Juli 98 neu hinzukamen. So ergibt sich der empirische Mittelwert der ersten Nutzung in der MEGS-Einheit im Segment 19 wie folgt:

| | |
|---|---|
| emp. Mittelwert X (erste Nutzung) | 1269.33 |
| Anz. der Beobachtungen(=Teilnehmer im Segment 19) | 18989 |

Damit läßt sich der Unterschied der Segmente 19und 28 bezüglich ihrer empirischer Mittelwerte erklären, denn viele Nutzer des Segmentes 19 kommen erst zu einem relativ späten Zeitpunkt als Nutzer in Frage, d.h. an den Tagen vor ihrem Eintritt ins Netz ist ihr Tagesgesamtumsatz seit dem 11. Juli 98 gleich 0, was sich natürlich sofort auf den empirischen Mittelwert auswirkt.

Klassenzugehörigkeit

Zur weiteren Untersuchung des Verhaltens von Normalkunden wird nun die Klassenzugehörigkeit des Teilnehmers betrachtet. Je nach Kundenalter sind dem Teilnehmer die Klassen A, B, C, D und E vom Netzbetreiber zugewiesen worden, welche eine gute Grundlage zur Beurteilung der Zahlungsmoral der Teilnehmer bilden.

Aufgrund einer nicht ausreichenden Datenbasis läßt sich dieses Merkmal zur Verhaltenscharakterisierung der Teilnehmer jedoch bisher nicht genau untersuchen, da Segment 19 sehr junge Kunden (im Sinne des Alters im Netz) enthält und demzufolge fast alle Teilnehmer in Klasse A eingestuft sind. Ähnliches gilt für Segment 28. Hier ist der überwiegende Anteil der Kunden bereits in die Klassen C und D eingestuft, so daß auch mit diesem Datensatz alleine keine genauen Aussagen zu treffen sind. Weitere Segmente stehen bei den bisherigen Untersuchungen nicht

zur Verfügung, womit eine genaue Betrachtung der Verteilung der Klassenzugehörigkeiten ohne zusätzliche Daten nicht erfolgen kann. Die Häufigkeiten der Klassenzugehörigkeiten in den Segmenten 19 und 28 sind in folgender Tabelle aufgelistet und sollen obige Ausführungen verdeutlichen.

| Klasse | Segment 19... | Segment 28... |
|---|---|---|
| nicht Klassifiziert | 909 | 77 |
| Klasse A | 18078 | 6234 |
| Klasse B | 1 | 6933 |
| Klasse C | 1 | 13419 |
| Klasse D | 0 | 46784 |
| Klasse E | 0 | 3 |

Charakterisierung des Teilnehmerverhaltens anhand der Einzelverbindungsdaten

Nach den Untersuchungen der 80-Tage-Daten werden die vorhandenen Verbindungsdaten der Einzelgespräche in die Betrachtungen mit einbezogen, da sich in diesen Datensätzen zusätzliche Informationen über das Kundenverhalten finden lassen. Insbesondere werden die zur Analyse der MEGS Filter nötigen Randverteilungen behandelt.

Zur Beschreibung des Teilnehmerverhaltens sind hier vor allem die Daten über die gewählte Zielrufnummer des Kunden, die Gesprächsdauer eines gemachten Anrufes und die Anzahl der Anrufe pro Tag sowie die Verteilung der Umsätze von besonderem Interesse, weil sie sehr gut die verschiedenen Aspekte des Kundenverhaltens aufzeigen. Zu diesen drei Merkmalen wurden stochastische Modelle und Verteilungsannahmen erstellt.

Die ersten Untersuchungen in diesem Rahmen gelten der Gesprächsdauerverteilung der Einzelverbindungen. Die Gesprächsdauern werden als Realisationen einer stetigen Zufallsvariablen D angesehen, obwohl sie in den Datensätzen als diskrete Werte vorliegen. Ein grafische Darstellung der relativen Häufigkeiten der Gesprächsdauern ist in den Figuren 12 und 13 dargestellt.

Als nächstes erfolgt die Aufstellung eines Modells zur Zielrufnummernverteilung der Teilnehmer. Wiederum kann man das Ziel, das ein Kunde anwählt, als zufällig ansehen. Es soll durch die diskrete Zufallsvariable Z beschrieben werden, deren Träger im folgenden genauer erläutert wird.

Der Zielrufnummernbereich wird aufgrund der Vielzahl der Möglichkeiten in verschiedene Kategorien eingeteilt, die dann als Punkte des Trägers von Z dienen. Diese Einteilung ist in Tabelle 1 mit einigen Erklärungen zusammengefaßt.

Tabelle 1:

| Zielrufnummernkategorien | |
|---|---|
| Vorwahlen | Beschreibung |
| 0177 / 0171 / 0172 | Vorwahlen der deutschen Mobilfunkanbieter |
| 0130 / 0180 / 0190 | deutsche Vorwahlnummern mit speziellen Tarifen |
| 2.... / 3883 | Servicenummern vom Netzbetreiber (z.B. T-Box) |
| sonstige nat. Vorwahlen | alle noch nicht erfaßten deutschen Vorwahlen |
| roaming | Verbindung zu anderen Mobilfunknetzen (ohne internationales roaming, keine Zielangabe) |
| MTC | MTC-Verbindungen, keine Zielangabe (auch call forward, international, roaming) |
| Fax-Verbindungen | national, international und roaming |
| internationale Vorwahlen | Gesamtzahl aller internationalen Verbindungen und Aufspaltung nach den einzelnen Staaten (auch internationales roaming) |

Zu beachten ist hierbei, daß nicht nur die Information der Zielrufnummer selbst aus den Einzelverbindungsdaten benötigt wird, sondern zusätzlich auch noch der sogenannte "Calltype", der angibt, ob es sich um ein nationales, internationales oder ein roaming Gespräch handelt und der die mobile terminated calls (MTC) ausweist.

Die Wahl der Trägerpunkte erfolgt insbesondere nach dem Gesichtspunkt der anfallenden Kosten für einen

Anruf. Dies trifft besonders auf die Sondernummern 0130 und 0180 und auf die Servicenummern 2... und 3... zu, deren Tarife bundeseinheitlich sind. Dasselbe Argument gilt auch für die verschiedenen Mobilfunkanbieter in Deutschland, die jeweils als eigene Kategorie aufgenommen wurden. Die Tarife der verschiedenen 0190 Verbindungen unterscheiden sich zwar untereinander, jedoch werden alle Verbindungen dieser Art in einer Gruppe zusammengefaßt, um die Anzahl der Trägerpunkte im Hinblick auf die weiteren Betrachtungen nicht zu sehr zu vergrößern. Die Einteilungen roaming, internationale Anrufe und MTC zeichnen sich zwar nicht durch einheitliche Kosten aus, heben sich aber aufgrund ihrer Tarifstruktur von den bisher genannten Kategorien ab. Um alle Ziele erfassen zu können, werden zusätzlich die Faxanrufe gesondert betrachtet, da es sich hierbei um nicht um Gespräche, sondern um Datenübertragung handelt. Die Kategorie der sonstigen nationalen Zielrufnummern weist keine einheitliche Kostenstruktur auf. Dennoch müssen auch diese Zielrufnummern erfaßt werden, um eine vollständige Auswertung zu erhalten. Aufgrund der Vielfalt der nationalen Vorwahlnummern und deren Tarifstrukturen kann hier nicht weiter in Klassen unterteilt werden. Somit läßt sich der Träger $T_z$ der Zufallsvariablen darstellen als

$$T_Z = \{\text{' 0177',' 0171',' 0172',' 0130',' 0180',' 0190',' Service',}$$

$$\text{' national',' roaming',' MTC',' Fax',' international'}\}$$

$$=: \{t_1\ , t_2, \ldots , t_{12}\}$$

Mit Hilfe der vorliegenden Einzelgesprächsdaten aus den Segmenten 19, 28, 30 und 31 wird nun die empirische Verteilung der Zufallsvariablen Z bestimmt. Ein Auflistung der berechneten relativen Häufigkeiten findet sich in den Zeichnungsfiguren 4-11. Um ein noch genaueres Bild der Zielrufnummernverteilung zu finden, wird der Trägerpunkt $t_{12}$ ='international' noch einmal aufgespalten nach den verschiedenen internationalen Vorwahlen. Man erhält also ein erweitertes Modell, daß beschrieben wird durch die Zufallsvariable $\hat{Z}$ mit Träger

$$T_{\hat{Z}} = \{t_1, \ldots, t_{11}, i_1, i_2, \ldots, i_{225}\}$$

Dabei sind die $t_i$, i = 1, ...,11 genau wie oben definiert und die Trägerpunkte $i_k$, k = 1, ...,225 stehen für die der Größe nach absteigend angeordneten 225 verschiedenen internationalen Vorwahlnummern.

Auch hier ist wiederum die empirische Verteilung von $\hat{Z}$ in den Tabellen 12-18 enthalten.

Nachdem nun die Verteilung der Zielrufnummern mit Hilfe des gerade beschriebenen Modells und der Zufallsvariablen Z beschrieben wurde, lassen sich zusammen mit dem Modell der Gesprächsdauerverteilung einige Randverteilungen angeben, die Wahrscheinlichkeiten der Form

$$|P(D = x|Z = t_i),\ i = 1,\ldots,12$$

ausdrücken und deren empirische Erwartungswerte und Varianzen sind in den Tabellen 12-18 zusammengefaßt. Diese Informationen werden später genutzt, um die MEGS Filter zu analysieren.

Aus den Plots der relativen Häufigkeiten der Anrufanzahlen läßt sich ablesen, daß N einer diskreten Verteilung genügt, deren Zähldichte angenähert folgende Form besitzt:

$$a\ (k+ b)^c,\ \text{für}\ k \in N$$

Die Parameter a, b und c lassen sich durch Schätzungen aus den vorliegenden Daten berechnen. Allerdings ist aufgrund der Form der Zähldichte ihre Summierbarkeit nicht notwendigerweise gegeben. Figur 25 zeigt die relativen Häufigkeiten der Anrufanzahlen bei Normalkunden und die Approximation der empirischen Werte durch eine Funktion $t(x) = 113.5*(4.34 + x)^{-3.42}$ Die Parameter von t(x) wurden für diese Darstellung numerisch berechnet. Aufgrund einer geringeren Beobachtungszahl zeigen die Grafiken der Anrufanzahlen bei erkannten Betrügern eine größere Streuung als bei den Kunden ohne Betrugsabsicht. Eine entsprechende Darstellung findet sich in der Figur 21.

Wie schon bei der Gesprächsdauerverteilung erwähnt, sind auch bei den Verteilungen der Anzahl der Anrufe pro Tag und der Umsatzverteilung die entsprechenden gemeinsamen Verteilungen durch den empirischen Mittelwert und die empirische Varianz in den Figuren 12-18 dargestellt.

Stochastische Abhängigkeit der Zielrufnummern

Um die vom Netzbetreiber benutzten Filter des MEGS - Systems analysieren zu können, sind zusätzliche Informationen zur Zielrufnummernverteilung nötig.

So sind einige Filter darauf ausgelegt, diejenigen Teilnehmer zu erfassen, die mehrmals an einem Tag in eine bestimmte Weltzone telefonieren. Die empirischen Wahrscheinlichkeiten, überhaupt in eine der Weltzonen zu telefonieren, können beim oben beschriebenen Modell den Zeichnungsfiguren entnommen werden. Wären die Ereignisse, daß ein Gespräch in eine der beschriebenen Kategorien fällt, stochastisch unabhängig, so könnte man die Wahrscheinlichkeiten dafür, daß an einem Tag k-mal in eine bestimmte Zielklasse telefoniert wird, durch das k-fache Produkt der empirischen Wahrscheinlichkeiten der entsprechenden Klasse bei Verteilung Z bzw. *Z* angeben.

Wie bereits vermutet, sind die Zielrufnummernkategorien jedoch nicht stochastisch unabhängig. Dies wird gezeigt, indem wir die paarweise stochastische Unabhängigkeit von je zwei Klassen mit Hilfe eines Tests beruhend auf Kontingenztafeln widerlegen.

Im folgenden sollen Zufallsvariablen X und Y mit nominalen Ausprägungen betrachtet werden, wobei X die Kategorie des letzten Anrufs und Y die Kategorie des nächsten Anrufes angibt. Sie besitzen also beide den Träger T = $T_Z$ \ {'MTC'}. Unter einer nominalen Ausprägung versteht man dabei Werte, die keiner Rangfolge unterliegen und nicht vergleichbar sind, wie etwa die Trägerpunkte '0171', '0180' und '0190'.

Zur Darstellung von nominalen Zufallsvariablen und deren Untersuchung wird das Konzept der Kontingenztafeln verwendet. Dazu habe X I und Y J nominale Ausprägungen. Es gibt also M = I * J mögliche Kombinationen, um Beziehungen zwischen X und Y zu beschreiben. Die Beobachtungen (X, Y) eines Merkmalpaares haben eine Wahrscheinlichkeitsverteilung, die in einer Tabelle mit I Zeilen und J Spalten dargestellt wird. Die Zellen der Tabelle repräsentieren die I * J möglichen Ergebnisse. Ihre Wahrscheinlichkeiten seien mit $p_{ij}$ bezeichnet, wobei $p_{ij}$ die Wahrscheinlichkeit angibt, daß die Beobachtung in Zelle (i, j) fällt. Stehen in den Zellen die Häufigkeiten eines Merkmalpaares, so spricht man von einer (I x J) Kontingenztafel.

Die Wahrscheinlichkeitsverteilung der $p_{ij}$ ist die gemeinsame Verteilung von X und Y. Die Randverteilungen, die sich als Zeilen- bzw. Spaltensummen über die $p_{ij}$ ergeben, werden bezeichnet durch

$$p_{i.} = \sum_j p_{ij} \quad \text{und} \quad p_{.j} = \sum_i p_{ij}.$$

Allgemein muß dabei noch folgende Nebenbedingung erfüllt sein:

$$\sum_i p_{i.} = \sum_j p_{.j} = \sum_i \sum_j p_{ij} = 1$$

Um die Unabhängigkeit zu testen, wird die Hypothese

$$H_0{:}p_{ij} = p_{i.}{*}p_{.j} \text{ bzw. } m_{ij} = \frac{m_{i.}{*}m_{.j}}{n}$$

überprüft, wobei n die Gesamtanzahl aller Beobachtungen und $m_{ij}$, $m_{i.}$, $m_{.j}$ die entsprechenden erwarteten Häufigkeiten angeben. $m_{ij}$ kann aus den beobachteten Häufigkeiten durch den Maximum-Likelihood-Schätzer

$$\hat{m}_{ij} = \frac{n_{i.}{*}n_{.j}}{n}$$

berechnet werden. Die Hypothese $H_0$ wird abgelehnt zum Niveau $\alpha$, wenn der Wert der Teststatistik

$$\chi^2 = \sum_{i=1}^{I}\sum_{j=1}^{J}\frac{(n_{ij}-\hat{m}_{ij})^2}{\hat{m}_{ij}}$$

größer als das (1 - $\alpha$) Quantil der zugehörigen $\chi^2$ Verteilung mit (I - 1)*(J - 1) Freiheitsgraden ist.

Mit Hilfe dieses Tests kann man für jedes übliche $\alpha$ Niveau die Hypothese von paarweise stochastisch unabhängigen Zielrufnummernkategorien bei Anrufen an einem Tag ablehnen.

Geplante Untersuchungen der Einzelverbindungsdaten

Von besonderem Interesse bei der Verhaltensuntersuchung von Teilnehmern mit- und ohne Betrugsabsicht ist, wie schon oben erwähnt, die Klassenzugehörigkeit des Kunden, die seine Zahlungsmoral dokumentiert. Leider liegt diese vom Netzbetreiber vorgenommene Einteilung nicht als Information in den Einzelverbindungsdaten vor, so daß für die Segmente 30 und 31 keine Untersuchungen diesbezüglich durchgeführt werde können. Die Klasseneinteilungen sind nur in den 80-Tage-Datensätzen, also für die Segmente 19 und 28 vorhanden. Allerdings eignet sich das Segment 19 wegen der anfangs erwähnten Gründe nicht für eine Untersuchung dieses Verhaltensmerkmals. Daher wird die Verwendung dieser Informationen erst möglich, wenn genügend viele Daten hierzu zur Verfügung stehen. Deshalb werden zur Betrachtung dieses Verhaltensmerkmals die Klassenzugehörigkeiten zusammen mit den Einzelverbindungsdaten benötigt, um gesicherte Ergebnisse zu erhalten.

Weiterhin ist eine Untersuchung der Zellen geplant, aus denen die Kunden ihre Telefonate führen. Es soll festgestellt werden, ob es Zellen, also geographische Bereiche, mit besonders hohen Betrugsraten gibt. Allerdings ist auch hierzu die vorhandene Datenbasis der erkannten Betrüger nicht ausreichend, um gesicherte Erkenntnisse zu gewinnen.

Kunden mit Betrugsabsicht

Nun soll das Verhalten von Betrügern analysiert und mathematisch beschrieben werden. Die Informationsbasis für die folgenden Betrachtungen bilden die vom Netzbetreiber zur Verfügung gestellten Daten von bereits erkannten Betrügern aus verschiedenen Segmenten.

Tagesumsätze der 80-Tage-Daten

Aus den vorliegenden Betrügerdaten zu den 80-Tage-Datensätzen ist es nicht möglich, eine Verteilungsaussage für den Tagesgesamtumsatz bei Teilnehmern mit Betrugsabsicht zu machen, denn zu den Informationen der 18989 bzw. 73450 Kunden des Segmentes 19 bzw. 28 liegen insgesamt nur Daten über 8 bzw. 4 Betrüger der entsprechenden Teilnehmergruppen vor. Außerdem sind 3 dieser 12 Kunden durch nicht zur Verfügung stehende Zusatzinformationen als Betrüger erkannt worden, da sich ihre Gesamtumsätze in den betrachteten 80 Tagen nur auf 1 bis 6 DM belaufen, womit für eine Verteilungsschätzung nur mehr 8 Beobachtungen in Frage kommen.

Betrügerverhalten anhand der Einzelverbindungsdaten

Zur Charakterisierung des Betrügerverhaltens liegen die Einzelverbindungsdaten von 57 bereits vom Netzbetreiber erkannten Betrügern vor. Leider handelt es sich hierbei nur um die Informationen aus 3708 einzelnen Gesprächen, was gegenüber mehr als einer Million Datensätzen zum Normalkundenverhalten eine sehr geringe Zahl ist. Aufgrund der kleinen Anzahl an Beobachtungen wird es nicht immer möglich sein, für alle Aspekte des Betrügerverhaltens Wahrscheinlichkeitsverteilungen zu verifizieren. Eine Schätzung der ersten und zweiten Momente bleibt jedoch möglich und sinnvoll.

Klassifizierung der erkannten Betrüger

Aufgrund der vorhandenen Informationen über bereits vom Netzbetreiber erkannte Betrüger wird im folgenden eine Klasseneinteilung der Teilnehmer mit Betrugsabsichten vorgenommen. Damit soll das Verhalten von bestimmten Betrügergruppen voneinander abgegrenzt werden, um auf diese Weise scharfe Tests zu deren Erkennung anzugeben angeben zu können.

Als Motivation kann hierzu die Gegenüberstellung von Tagesgesamtumsatz und Tagesumsatz auf 190-er Nummern aus Figur 26 dienen. Es ist deutlich zu erkennen, daß die Punktmenge in zwei Klassen zerfällt, nämlich zum

einen Punkte entlang der Hauptdiagonalen für Kunden, deren gesamter Umsatz aus Gesprächen auf 190-er Nummern besteht. Zum anderen entsprechen die Punkte entlang der x-Achse Datensätzen mit nur geringem Umsatz auf 190-er Nummern.

Zur Klassifizierung der Kunden mit Betrugsabsicht führen wir eine Hauptkomponentenanalyse der geschätzten Kovarianzmatrix $R_b$ durch. Zugrundegelegt wird je Tag und Teilnehmer ein Tagesdatensatz bestehend aus 30 Merkmalen. Betrachtet werden die Tagesumsätze, die Anzahl der Anrufe pro Tag und die täglichen Gesprächsdauern. Jedes dieser drei Hauptmerkmale wird in die zehn schon genannten Zielrufnummernkategorien unterteilt. Innerhalb des Datensatzes werden sie jeweils in der Reihenfolge 171-, 172-, 177-, 180-, 190-er Nummer, Auslandsgespräch, sonstige nationale Verbindung, roaming, Service und MTC Anrufe für die Hauptmerkmale verwendet. Bezeichne dazu $yi \in R^{30}$ , i = 1, ..., n, den Vektor mit Merkmalen eines Tagesdatensatzes eines Kunden mit Betrugsabsicht und n deren Anzahl. Sei ferner

$$\bar{y} = \frac{1}{n}\sum_{i=1}^{n} y_i$$

der geschätzte Erwartungswert. Dann verwenden wir die Maximum-Likelihood-Schätzung der Kovarianzmatrix

$$R_b = \frac{1}{n}\sum_{i=1}^{n}(y_i - \bar{y})(y_i - \bar{y})^T.$$

Wir stellen nun die Matrix $R_b$ dar als

$$R_b = T \Lambda T'$$

mit einer Orthogonalmatrix T und einer Diagonalmatrix $\Lambda$, die als Diagonaleinträge die der Größe nach absteigend geordneten Eigenwerte

$$\sigma_1^2 \geq ... \geq \sigma_n^2$$

enthält. Dabei erhalten wir

$$(\sigma_1^2 ..., \sigma_{30}^2) = (8e + 08, 2e + 08, 7e + 06, 3e + 06, 2e + 06,$$

$$1e + 06, 1e + 05, 6e + 04, 4e + 04, 1e + 04,$$

$$1e + 04, 4406, 2434, 480, 308, 147, 115, 115, 35.3,$$

$$19.4, 7.3, 1.8, 1.1, 0.6, 0.3, 0.1, 0.02, 0.01, 0.002).$$

Offensichtlich liegt der durch die ersten beiden Hauptkomponenten beschriebene Anteil der totalen Variabiliät bei

$$\frac{\sigma_1^2 + \sigma_2^2}{\sigma_1^2 + ... + \sigma_{30}^2} = 98.6\%.$$

Das heißt, daß die transformierten Datensätze

$$\tilde{y}_i = \left(\tilde{y}_{i,1},\ldots,\tilde{y}_{i,30}\right) = T'\left(y_i - \bar{y}\right), \quad i = 1, \ldots, n,$$

bis auf einen vernachlässigbar kleinen Fehler in einem zweidimensionalen Unterraum liegen, der durch die ersten zwei Einheitsvektoren aufgespannt wird. Ferner besitzt die j-te Hauptkomponente $\tilde{y}_{i,j}$ den Erwartungswert 0, Varianz $\sigma_i^2$ und verschiedene Hauptkomponenten sind unkorreliert.

Die Eigenvektoren $t_i$ der Matrix $R_b$ sind die Spalten der orthogonalen Transformationsmatrix T, das heißt

$$T = (t_1, \ldots, t_{30}).$$

Durch die betragsgrößten Einträge des ersten und zweiten Eigenvektors lassen sich die Betrüger diskriminieren, indem man die zu diesen Komponenten gehörenden Kategorien als klassifizierendes Merkmal für Betrügerverhalten ansieht. Anhand der zu $\sigma_1^2$ und $\sigma_2^2$ gehörenden Eigenvektoren ergibt sich die Einteilung von Teilnehmern mit Betrugsabsicht in solche Kunden, deren Mißbrauch durch 0190-er Nummern oder durch Auslandsgespräche gekennzeichnet ist. In Figur 27 ist die Gruppe der 0190-er Betrüger dargestellt durch die erste Hauptkomponente, die in Richtung der x-Achse verläuft. Die restlichen Betrüger, die durch Auslandsgespräche auffallen, lassen sich durch die zweite Hauptkomponenten in Richtung der y-Achse erkennen.

Tests zur Betrügererkennung

Nach der Diskriminierung der vom Netzbetreiber bereits erkannten Betrüger durch eine Hauptkomponentenanalyse werden nun statistische Testverfahren zur Erkennung der Betrüger angegeben. Dazu werden die Beobachtungen des Verhaltens von Teilnehmern ohne Betrugsabsicht als zufällig angesehen und mit der Zufallsvariablen X-($\mu$, $R_e$) bezeichnet, deren Verteilung den Erwartungswert $\mu$ und die Varianz $R_e$ besitzt. Die Matrix $R_e$ wird wieder zerlegt in

$$R_e = S \, \Theta \, S',$$

wobei $S = (s_1, \ldots, s_{30})$ eine Orthogonalmatrix ist.

$$\Theta = diag\left(\vartheta_1^2,\ldots,\vartheta_{30}^2\right) \quad \text{mit} \quad \vartheta_1^2 \geq \ldots \geq \vartheta_{30}^2$$

bezeichnet die Diagonalmatrix der geordneten Eigenwerte von $R_e$, deren Schätzungen gegeben sind durch

$$\vartheta_1^2,\ldots,\vartheta_{30}^2 = (2e+05,\ 7e+04,\ 7e+04,\ 6e+04,\ 2e+04,$$

$$2e+04,\ 1e+04,\ 1e+04,\ 7226,\ 6757,$$

$$4732,\ 2922,\ 1099,\ 983,\ 646,\ 440,\ 322,\ 293, 162,\ 4.4,$$

$$3.9,\ 1.7,\ 0.8,\ 0.4,\ 0.4,\ 0.3,\ 0.2,\ 0.16,\ 0.01,\ 0.002).$$

Mit Hilfe der Orthogonalmatrix T aus der Hauptkomponententransformation von $R_b$ bilden wir

$$\tilde{X} = T'\left(X - \mu\right),$$

woraus mit der Linearität des Erwartungswertes

$$E\left[\tilde{X}\right]=0$$

und

$$E\left[\tilde{X}\,\tilde{X}'\right]=T'R_eT$$

folgt. Unter Anwendung der Eigenvektoren $t_1$, $t_2$ zu den beiden größten Eigenwerten der Kovarianzmatrix $R_b$ der Betrüger aus dem vorherigen Abschnitt ergibt sich

$$E[t_1'\tilde{X}]=0 \text{ und } Var(t_1'\tilde{X})=\sum_{i=1}^{30} t_{1,i}^2\vartheta_i^2$$

beziehungsweise

$$E[t_2'\tilde{X}]=0 \text{ und } Var(t_2'\tilde{X})=\sum_{i=1}^{30} t_{2,i}^2\vartheta_i^2.$$

$t_{1,i}$ und $t_{2,i}$ bezeichnet dabei die i-te Komponente des Vektors $t_1$ bzw. $t_2$. Insbesondere gilt

$$Var\left(t_1'\tilde{X}\right)=\leq \vartheta_1^2\,\forall i=1,\ldots,30.$$

Ferner ist der Mittelwert der Datensätze $Y_i$ unter obiger Transformation

$$\frac{1}{m}\sum_{i=1}^{m} T'(y_i-\mu)=T'(\bar{Y}-\mu)$$

und die Varianzen stimmen mit den Werten $\vartheta_1^2,\ldots,\vartheta_{30}^2$ aus $\Lambda$ überein.

Da die Werte $\mu$, und $R_e$ nicht bekannt sind, werden sie aus den vorliegenden n Beobachtungen $X_i$ mit Hilfe der Maximum-Likelihood-Schätzer

$$\mu=\bar{X}, \text{ und } R_e=\frac{1}{n}\sum_{i=1}^{n}(X_i-\bar{X})(X_i-\bar{X})'$$

geschätzt. Die Anwendbarkeit der Zerlegung der geschätzten Kovarianzmatrix zur Hauptkomponententransformation ist sichergestellt.

Die Ergebnisse der Untersuchungen der Betrüger aus dem letzten Abschnitt sind nun zusammen mit der gerade durchgeführten Hauptkomponententransformation der Normalkundendaten in der Figur 21 zusammengefaßt. Gut zu erkennen ist in dieser Grafik die deutlich kleinere Varianz der Hauptkomponenten bei Normalkunden

$$(Var\left(t_i'\,\tilde{X}\right)\leq \vartheta_1^2=2*10^5$$

im Gegensatz zu $\vartheta_2^2 \geq 2*10^8$), die zusammen mit der Verschiebung der Erwartungswerte für Kunden mit Betrugsabsicht in Richtung größerer Hauptkomponenten die Anwendung von Ausreißertests ermöglicht.

Zwecks Angabe eines Tests zur Betrugserkennung werden die beiden Hauptkomponenten jeweils gesondert betrachtet, das heißt es wird ein spezieller Test für die 190-er und für die Auslandsbetrüger entwickelt. Zunächst wird das empirische (1-α)-Quantil $Q^i_{1-\alpha}$, $i$ = 1,2 für die beiden Hauptkomponenten geschätzt. Benutzt werden dazu die angeordneten n Beobachtungen

$$X^i_{1:n}, X^i_{2:n}, \ldots, X^i_{n:n}$$

Anschließend wird diejenige Zahl k bestimmt, für die gilt

$$k = \begin{cases} n(1-\alpha) & \text{falls } n(1-\alpha) \text{ ganzzahlig} \\ n\lfloor(1-\alpha)+1\rfloor & \text{sonst} \end{cases}$$

Dann ist das Quantil $Q^i_{1-\alpha} = X^i_{k:n}$. Für die speziell vorliegenden Daten ergeben sich für α = 0.005 die Quantile $Q^1_{1-\alpha}$ = -0.035 und $Q^2_{1-\alpha}$ =14.1089.

Mit Hilfe der empirischen Quantile kann nun der Test auf Betrugsabsicht durch die Hauptkomponententransformation der Teilnehmerdaten eines Tages gestaltet werden. Liegt der Wert der Transformation der Kundendaten oberhalb eines der beiden errechneten Quantile $Q^i_{1-\alpha}$, so nimmt man an, daß es sich um einen Betrüger handelt. Der Parameter α gibt hierbei die Fehlerwahrscheinlichkeit dafür an, daß ein Kunde ohne Betrugsabsicht zu Unrecht als Betrüger erkannt wird. Dieser Irrtum ist natürlich so gering wie möglich zu halten. Zur Anwendung des Tests ist es nicht notwendig, die Quantile $Q^i_{1-\alpha}$ jedesmal neu zu berechnen, sondern es genügt eine periodische Neuberechnung dieser Werte. Neben diesem Test gibt es noch die Möglichkeit, anhand der grafischen Darstellung der Hauptkomponententransformation diejenigen Teilnehmer zu finden, deren Werte sich nicht auf den errechneten Transformationsachsen befinden und die dadurch in ihrem Verhalten auffällig sind, da sie durch eine Kombination von 0190-er Anrufen und Auslandsgesprächen betrügen. Die entsprechenden Kundendaten können dann manuell auf Betrugsabsicht überprüft werden, da sie nicht durch den gerade beschriebenen Test als Betrüger herausgefiltert werden. (Beispiele hierzu sind in Figur 21 zu erkennen.)

Das bisher beschriebene Vorgehen der Hauptkomponententransformation und des anschließenden Betrügertests läßt sich nicht nur auf Tagesdatensätze von Teilnehmern anwenden, sondern die zugrundeliegenden Daten können über einen beliebigen Zeitraum hinweg gesammelt und ausgewertet werden. Dadurch ergibt sich die Möglichkeit, das Verhalten der Teilnehmer über verschiedene Zeiträume hinweg automatisch zu untersuchen.

Die Auffälligkeiten der Teilnehmer wurden bisher nur anhand ihrer ersten zwei dominierenden Hauptkomponenten, das heißt 190-er und Auslandsverbindungen gemessen, da sich die bereits erkannten Betrüger in dem zur Verfügung stehenden Datenmaterial nur durch diese beiden Aspekte in ihrem Verhalten auszeichnen. Sinnvoll ist jedoch die Erkennung jeder Art von Verhaltensabnormität gegenüber Teilnehmern ohne Betrugsabsichten. Aus diesem Grund wird ein Test auf mehrdimensionale Ausreißer benutzt. Dieser beruht auf der Mahalanobis-Distanz

$$\left(X_i - \bar{X}\right)' R_e^{-1}\left(X_i - \bar{X}'\right),$$

die Abweichungen des Verhaltens von dem der Normalkunden mißt. Eine explizite Angabe des Tests kann nicht erfolgen, da nur Daten über Betrüger der beiden schon genannten Klassen zu Verfügung stehen. Alternativ zur Abweichung des Verhaltens eines Teilnehmers von dem der Normalkunden kann natürlich auch die Abweichung vom Betrügerverhalten durch die Anwendung von $R_b^{-1}$ gemessen werden. Durch diese Distanzen ist man in der Lage, das Teilnehmerverhalten besser zu überblicken und auf signifikante Abweichungen zu testen. Aufgrund der begrenzten Anzahl unterscheidbarer Betrügertypen in den zur Verfügung gestellten Daten ist eine weitergehende Betrachtung der mehrdimensionalen Ausreißtests zum gegenwärtigen Zeitpunkt jedoch nicht möglich.

Als weiteres Testverfahren zur Betrügererkennung kann Fishers Diskriminanzanalyse verwendet werden, die auf der Trennung der Betrüger von den Normalkunden durch eine Ebene basiert. Gesucht wird eine lineare Funktion $a'x$, die das Verhältnis der quadrierten Abstände zwischen den beiden Teilnehmergruppen maximiert und diese so voneinander trennt. Der Vektor $\bar{a}$ ist dabei der Eigenvektor zum größten Eigenwert der Matrix $W^{-1}B$, die sich berechnet aus

$$W = n_1 R_e + n_2 R_b$$

und

$$B = \left(\frac{n_1 n_2}{n}\right) dd'$$

wobei $d = \mu - \bar{Y}$.

Dabei gibt $n_1$ die Anzahl der Normalkundendaten und $n_2$ die der Betrügerdaten an. Der zugehörige Eigenvektor *a* ergibt sich zu $a = W^{-1}d$. Es wird die Teststatistik

$$d'W^{-1}\{X - \frac{1}{1}(\mu + \bar{Y})\}$$

vorgeschlagen, die die Lage eines Punktes zum Mittelpunkt der Verbindungsstrecke zwischen $\mu$ und $\bar{Y}$ benutzt. Allerdings ist es für die Anwendung auf die Problemstellung der Betrugserkennung beim Netzbetreiber sinnvoll, diesen Testwert anders zu skalieren, was keine Auswirkungen auf die Korrektheit des Verfahrens selbst hat. Die Ergebnisse der Anwendung von Fisher's Diskriminanzanalyse sind in Figur 28 dargestellt. Auf der y-Achse sind die Werte der Statistik (1) über den Werten $i / n_1$ für ehrliche Benutzer und $j / n_2$ für Betrüger abgetragen.

Es zeigt sich, daß etwa 30% der Betrügerdaten unterhalb der Linie bei y = 0.0025 liegen. Es ist zu erwarten, daß durch einen entsprechenden Diskriminanztest ein hoher Anteil der Betrüger auffällt. Man beachte, daß verschiedene Datensätze zu derselben Person gehören; im behandelten Fall liegen 213 Datensätze zu 57 erkannten Betrügern vor. 30% entsprechen etwa 70 Datensätzen hiervon, die als betrügerisch erkannt werden.

Algorithmus zur Betrugserkennung

Gegeben seien die neue Beobachtung X und die Quantile $Q^{i}_{1-\alpha}$

a) Berechne die Hauptkomponententransformation

$$\tilde{X} = T'(X - \mu)$$

b) Teste die Transformation auf

$$\tilde{X}_i \le Q^i_{1-\alpha}, i = 1,2$$

$\tilde{X} > Q^i_{1-\alpha}$ für ein i ⇒ X ist ein Betrüger, gehe zu c)

$\tilde{X}_i \le Q^i_{1-\alpha}$ für ein i ⇒ X ist Normalkunde gehe zu d)

c) Update des Erwartungswertes und der Kovarianzmatrix bei Betrügern

$$\bar{Y} \leftarrow \frac{nY + X}{n + 1}$$

$$R_b \leftarrow \frac{nR_b + (X - \bar{Y})(X - \bar{Y})'}{n + 1}$$

d) Update des Erwartungswertes und der Kovarianzmatrix bei Normalkunden

$$\bar{\mu} \leftarrow \frac{n\mu + X}{n + 1}$$

$$R_e \leftarrow \frac{nR_e + (X - \mu)(X - \mu)'}{n + 1}$$

Beurteilung ausgewählter MEGS - Filter

In diesem Abschnitt werden ausgewählte Filter des MEGS - Systems im Sinne der Fehlerwahrscheinlichkeiten 1. und 2. Art bewertet, die aus dem empirischen Modell der Zielrufnummernverteilung gewonnen werden.

Jeder Filter i kann als Test der Hypothese

$H_0^i$ : Teilnehmer ist kein Betrüger
$H_1^i$ : Teilnehmer ist Betrüger

aufgefaßt werden, d.h. ist ein Kunde durch den Filter i erfaßt worden, so wird die Hypothese $H_1^i$, also seine Betrugsabsicht angenommen.

Beim Testen von Hypothesen dieser Art können zwei verschiedene Fehler gemacht werden. Zum einen kann ein Normalkunde fälschlicherweise als Betrüger erkannt werden. Diesen Irrtum nennt man Fehler 1. Art, oder auch $\alpha$ - Fehler. Zum anderen kann es natürlich passieren, daß es sich bei dem getesteten Teilnehmer um einen Betrüger handelt und der Test sich trotzdem für die Hypothese $H_0^i$ entscheidet. Dies wird dann als Fehler 2. Art, oder als $\beta$ - Fehler bezeichnet. Im Sinne der Problemstellung ist es sinnvoll, den Fehler 1. Art zu beschränken, um nicht unnötig Kunden zu verlieren, deren Anschluß fälschlicherweise gesperrt wurde.

Die zuvor angesprochenen Fehlerwahrscheinlichkeiten sollen jetzt anhand der ermittelten empirischen Wahrscheinlichkeiten dargestellt werden, um so ein Bewertungsmaß für die eingesetzten Filter zu erhalten. Folgende Tabelle zeigt eine Aufstellung der Ergebnisse dieser Untersuchung.

| Beschreibung des Filters | $\alpha$-Fehler | $\beta$-Fehler |
|---|---|---|
| '0190' ≥ 100 DM/Tag | 0.000042 | 0.987325 |
| 'roaming' ≥ 500 DM/Tag | 0.000004 | 1 |
| Weltzone 2+9 ≥ 300DM/Tag | 0 | 0.995955 |
| 1 Anruf Weltzone 2 | 0.000462 | 0.837108 |
| 1 Anruf Weltzone 8 | 0.000389 | 0.989753 |
| 1 Anruf Weltzone 9 | 0.000189 | 0.898056 |
| 2 Anrufe/Tag in Weltzone 2+5 | 0.000160 | 0.991640 |
| 2 Anrufe/Tag in Weltzone 2+8 | 0.000162 | 0.994337 |
| 2 Anrufe/Tag in Weltzone 2+9 | 0.000468 | 0.990291 |
| 2 Anrufe/Tag in Weltzone 5+8 | 0.000121 | 0.994876 |
| 2 Anrufe/Tag in Weltzone 5+9 | 0.000430 | 0.989482 |
| 2 Anrufe/Tag in Weltzone 8+9 | 0.000431 | 0.992179 |
| 5 Anrufe/Tag in Weltzone 2 | 0.000016 | 0.995146 |
| 5 Anrufe/Tag in Weltzone 5 | 0.000012 | 0.997303 |
| 5 Anrufe/Tag in Weltzone 9 | 0.000062 | 0.994876 |

Der $\alpha$- Fehler berechnet sich als relative Häufigkeit des entsprechenden Filters bei Teilnehmern ohne Betrugsabsicht und der $\beta$ - Fehler als 1- relative Häufigkeit des Filters bei Betrügern.

Zu erkennen ist, daß die betrachteten Filter alle eine sehr geringe Fehlerwahrseheinlichkeit 1. Art, aber auch einen sehr hohen $\beta$ - Fehler aufweisen.

Vom Netzbetreiber werden noch eine Vielzahl weiterer Filter eingesetzt, die jedoch bis zum gegenwärtigen Zeitpunkt nicht bewertet werden können, da diese das Kundenalter, also seine Klassenzugehörigkeit benutzen, die

leider nicht bei den zur Verfügung stehenden Daten enthalten ist.

Im folgenden wird die Erfindung anhand von Tabellen und Zeichnungen näher beschrieben. Hierbei ergeben sich aus den Zeichnungen, Tabellen und deren Beschreibung weitere erfindungswesentliche Vorteile und Merkmale:

Es zeigen:

| | |
|---|---|
| Fig. 1: | relative Häufigkeit der Gesprächsumsätze bei Normalkunden |
| Fig. 2: | relative Häufigkeit der Gesprächsumsätze bei Betrügern |
| Fig. 3: | relative Häufigkeit der Anrufanzahlen pro Tag bei Betrügern |
| Fig. 4: | Tabelle der Werte der empirischen Verteilung der Zielrufnummern. |
| Fig. 5a und 5b: | Tabelle der Daten der Modellerweiterung für die verschiedenen int. Rufnummern |
| Fig. 6: | Tabelle der Häufigkeit von Anrufen aus dem Ausland nach Deutschland nach Zielrufnummern (Teilnehmer ohne Betrugsabsicht) |
| Fig. 7: | Tabelle der Häufigkeit von Anrufen aus dem Ausland nach Deutschland im Vergleich zu anderen Zielländern (Teilnehmer ohne Betrugsabsicht) |
| Fig. 8: | Tabelle der Häufigkeit von Anrufen aus dem Ausland nach Deutschland von Teilnehmern mit Betrugsabsicht |
| Fig. 9: | Tabelle der Häufigkeit von Anrufen aus dem Ausland von Teilnehmern mit Betrugsabsicht |
| Fig. 10 und Fig. 11: | Empirischen Werte der Zielrufnummern von Teilnehmern mit Betrugsabsicht |
| Fig. 12 bis Fig. 16: | Empirischer Mittelwert und empirische Varianz der Gesprächsdauer bei Normalkunden und bei Betrügern |
| Fig. 17 bis Fig. 18: | Empirische Werte der Umsatzverteilung bei Normalkunden und bei Betrügern |
| Fig. 19: | Kontingenztafel für den Test auf paarweise Unabhängigkeit der Rufnummern in einem bestimmten Beobachtungszeitraum |
| Fig. 20: | Darstellung der 612 bzw. 622 zugeordneten Hauptkomponenten |
| Fig. 21: | Ergebnis zu Fishers Diskriminanzanalyse |
| Fig. 22: | Die gerätetechnische Darstellung des Verfahrensablaufes nach Fig. 23 |
| Fig. 23: | Ablaufdiagramm des Verfahrens zur Betrugserkennung mit den Geräten nach Fig. 22 |
| Fig. 24: | Häufigkeiten der Tagesumsätze bei Normalkunden (Ausschnitt) |
| Fig. 25: | relative Häufigkeiten der Anrufanzahlen pro Tag bei Normalkunden und Näherung durch Funktion (Ausschnitt) |
| Fig. 26: | Tagesgesamtumsatz gegen Tagesumsatz auf 190-er Nummern |
| Fig. 27: | Die $\sigma_1^2$ bzw. $\sigma_2^2$ zugeordneten Hauptkomponenten |
| Fig. 28: | Ergebnis zu Fishers Diskriminanzanalyse |

Die Tabelle nach Fig. 4 enthält die Werte der empirischen Verteilung der Zielrufnummern für den Träger $T_Z = \{t_1, t_2, ..., t_{12}\}$. Zu beachten ist hierbei, daß verschiedene Kategorien wie etwa 'Service' und 'MTC' noch weiter unterteilt sind, damit sie leichter aus den vorliegenden Einzelverbindungsdaten extrahiert werden können. In der zweiten Tabelle nach Fig. 5 sind die Daten der Modellerweiterung für die verschiedenen internationalen Rufnummern enthalten. Es handelt sich hierbei um eine Aufspaltung der Kategorie 'internationale Verbindungen'. Die Datenbasis besteht aus 1391739 Beobachtungen.

In der Tabelle nach Fig. 6 und Fig. 7 sind für Teilnehmer ohne Betrugsabsicht noch einmal speziell die Anrufe aus dem Ausland nach Deutschland aufgeführt, also diejenigen mit Vorwahl 0049. Die relativen Häufigkeiten beziehen sich hier auf die entsprechende Anzahl der 0049 Verbindungen in der vorigen Tabelle.

Ganz analog zu den Tabellen der Teilnehmer ohne Betrugsabsicht sind in den Figuren 8, 9 und 10 die empirischen Werte der Zielrufnummern der Betrüger in drei Tabellen aufgelistet. Die Fig. 8 listet hierbei die Häufigkeit der gewählten Zielkategorie auf, während Figur 9 (mit der Fortsetzung durch Figur 10) die vom Betrüger vom Ausland aus gewählten Vorwahlen und deren Häufigkeit zeigt. In Figur 11 ist die vom Betrüger als häufigstes gewählte Zielkategorie dargestellt.

In den Tabellen der Figuren 13 bis 18 sind die empirischen Werte für Verteilungen bei festgelegten Zielrufnummernkategorien dargestellt.

Figur 12 zeigt die Gesprächsdauerverteilungen bei Normalkunden und Figur 13 bei Betrügern.

Figur 14 zeigt die Anzahl der Anrufe pro Tag bei Normalkunden und Figur 15 bei Betrügern.

Figur 16 und 17 zeigen die Umsatzverteilung bei Normalkunden und Figur 18 bei Betrügern.

Figur 19 zeigt schließlich den Unabhängigkeitstest für Zielrufnummernkategorien.

Die Tabelle zeigt die Kontingenztafel für den Test auf paarweise Unabhängigkeit der Rufnummernkategorien. Zu beachten ist dabei, daß keine '0130' Nummern beobachtet wurden, es sich also um eine 9 x 9 Tafel handelt, die zugehörige $X^2$ (Chi-Quadrat) Verteilung also 64 Freiheitsgrade besitzt. Bei dem hohen Wert der Teststatistik wird die Unabhängigkeitshypothese natürlich für alle sinnvollen Niveaus $\alpha$ abgelehnt.

Aus der Ablehnung der paarweisen stochastischen Unabhängigkeit folgt, daß keine gemeinsame stochastische Unabhängigkeit der Zielrufnummernkategorien gelten kann Dies gilt entsprechend für alle Tage.

Die Figur 20 zeigt die zeichnerische Darstellung der der $\sigma_1^2$ bzw. $\sigma_2^2$ zugeordneten Hauptkomponenten, während Figur 21 das Ergebnis der Fisher'schen Diskriminanzanalyse als graphische Darstellung zeigt.

Fig. 22 zeigt die gerätetechnische Ausführung des Verfahrens nach der Erfindung, welches als Blockschalbild in Fig. 23 dargestellt ist.

Im dargestellten Schritt a) sind die Telekornmunikations-Netzelemente beispielhaft dargestellt. Die Bezeichnung MSC bedeutet die elektronische Vermittlungseinheit, dargestellt durch einen Vermittlungsrechner, während VMS ein sogenanntes Voice Mail System ist, mit dem benutzerabhängige Netz-Sprachausgaben erzeugt werden.

Die Geräte-Einheiten VAS-NE bedeuten zusätzliche Netzelemente, wie z. B. Elemente der Gebührenerfassung und andere mehr.

Die Datensätze des Netzbetreibers, die in dieser Geräteumgebung erzeugt werden, werden über das Signalisierungssystem Nr. 7 (FileTransfer Access and Management) zu dem Rechner zur Missbrauchserkennung übertragen. Dieser Rechner wird auch als Kundendaten-Server bezeichnet.

Das hier erwähnte Signalisierungssystem Nr. 7 (FTAM) ist ein Schicht-7-Protokoll, welches ganze Pakete von Datensätzen mit einem Mal überträgt. Es handelt sich also um ein Datenfeld (File), in dem viele tausend Datensätze enthalten sind, die Online auf den Kundendatenserver übertragen werden.

In den Schritten b) bis g) wird das gesamte Verfahren, das Blockdiagramm in Fig. 22 und 23 als Schritt b) bis g) gekennzeichnet ist, ablaufen gelassen. Wichtig ist, daß Rechenschritte, wie die Hauptkomponententransformationen (Fisher'sche Diskriminanzanalyse und alle anderen Berechnungsschritte in Echtzeit auf diesem Rechner ablaufen.

Es werden die Ergebnisse berechnet und können im Schritt h) auf die Kundenbehandlungsstation (Customer Care Workstation) in Echtzeit übertragen werden.. An der Konsole dieser Station sitzt nun eine Bedienungsperson auf deren Bildschirm ein optischer und/oder akustischer Alarm erzeugt wird, wenn eine Missbrauchsnutzung erkannt wurde. Die Bedienungsperson kann dann noch während des laufenden Missbrauchsgespräches eingreifen und beispielsweise dieses Gespräch unterbrechen oder eine Wiederwahl und dgl. verhindern. Ebenso kann eine akustische Warnung an den Missbrauchsnutzer ausgegeben werden.

Es gibt auch eine Rückmeldung von der Kundenserver auf den Missbrauchsrechner. Die Bedienungsperson kann beispielsweise am Kundenrechner (bei einem ausgelösten Alarm) die Alarmschwelle oder andere Eingreifkriterien verändern. Diese Daten werden dem Missbrauchsrechner mitgeteilt, der daraus lernt und in seine Berechnungen einbezieht.

Figur 23 zeigt das Ablaufdiagramm des erfindungsgemäßen Verfahrens. Die hier ablaufenden Schritte a) bis h) sind in den Merkmalen des Anspruches 1 niedergelegt.

Wichtig ist die Rückleitung aus den in der Zeichnung am unteren Rand angeordneten Funktionsblöcken. Über diese Rückleitung erfolgt ein Update der errechneten Kovarianzen und Mittelwerte. Das System ist also selbstlernend.

Die Untersuchungen des zur Verfügung gestellten Datenmaterials haben gezeigt, daß sich das Verhalten von Teilnehmern mit Betrugsabsicht im wesentlichen durch nur zwei Merkmale charakterisieren läßt. Die erzielten Ergebnisse im Ausführungsbeispiel und den dargestellten Tabellen beziehen sich auf einen Beispielsdatensatz eines Netzbetreibers. Es konnten aufgrund der vorliegenden Daten lediglich zwei verschiedene Teilnehmergruppen mit Betrugsabsicht bestimmt werden.

**Patentansprüche**

1. Verfahren zur Mißbrauchserkennung von Dienstleistungen des Netzbetreibers durch Kunden mittels Online-Analyse von kundenbezogenen Datensätzen mit folgenden Schritten:

    a) Online-Erfassung der Eingabedatensätze aus den Netzelementen aus folgenden Komponenten:

        i) kumulierte Datensätze über einen festen Zeitraum;
        ii) Einzelverbindungsdaten der letzten datenschutzrechtlich genehmigten Dauer in Tagen, umfassend: Zielrufnummer, Gesprächsdauer, Verbindungsart;
        iii) kundenspezifische Daten;

    b) Akkumulierung der Eingabemerkmale nach Klassen: Zielrufnummertyp, Gesprächsanzahlen, Gesprächsarten;
    c) Durchführung der Hauptkomponentenanalyse:

        i) Durchführung einer Hauptkomponentenanalyse auf Datensätzen von bereits erkannten Betrügern;

ii) Spektralzerlegung der zugehörigen Kovarianzmatrix;
iii) Bestimmung der relevanten Hauptkomponenten;
iiii) Klassifizierung der für Betrugsverhalten relevanten Hauptkomponenten;

d) Hauptkomponententransformation der nichtdetektierten Datensätze auf der Basis der Spektralzerlegung der Kovarianzmatrix in Schritt c);
e) Darstellung der Hauptkomponenten von Datensätzen und Diskrimination bzgl. des Betrugsverhaltens
f) Schätzung und Ermittlung der empirischen Quantile der Hauptkomponenten zur Steuerung der Fehlerwahrscheinlichkeiten erster und zweiter Art bei automatischer Detektion und Alarmgenerierung;
g) Fisher'sche Diskriminanzanalyse zur Bestimmung einer trennenden Hyperebene zwischen Datensätzen von identifizierten Betrügern und Normalkunden mit graphischer Darstellung
h) Schätzung und Ermittlung der empirischen Quantile der projizierten Daten zur Steuerung der Fehlerwahrscheinlichkeiten 1. und 2. Art bei automatischer Detektion und Alarmgenerierung.

**2.** Verfahren nach Anspruch 1, **dadurch gekennzeichnet, daß** im Verfahrensschritt b) jeder Datensatz aus akkumulierten Daten durch einen hochdimensionalen reellen Vektor dargestellt wird.

**3.** Verfahren nach Anspruch 1 oder 2, **dadurch gekennzeichnet, daß** im Verfahrensschritt e) die Hauptkomponenten der Datensätze graphisch dargestellt werden.

**4.** Verfahren nach einem der Ansprüche 1-3, **dadurch gekennzeichnet, daß** im Verfahrensschritt e) das ermittelte Betrugsverhalten visuell dargestellt wird.

**5.** Verfahren nach einem der Ansprüche 1-4, **dadurch gekennzeichnet, daß** die Datensätze der Benutzer nach ihrem Gesprächsmerkmalen analysiert und in zugeordnete Klassen eingeteilt werden und daß die Einteilung in Klassen anhand des Verhaltens erfolgt, das eine bestimmte Gruppe von Teilnehmern mit Betrugsabsicht auszeichnet und das sich vom individuellen Verhalten der übrigen Teilnehmer signifikant unterscheidet.

**6.** Verfahren nach einem der Ansprüche 1-5, **dadurch gekennzeichnet, daß** das Verhalten von Kunden mit Betrugsabsicht durch folgende zwei Merkmale **gekennzeichnet** ist

a) Mißbrauch von 0190-Nummern und gleichzeitig
b) Führung von auffallend vielen Auslandsgesprächen im Untersuchungszeitraum.

**7.** Verfahren nach einem der Ansprüche 1-6, **dadurch gekennzeichnet, daß** ein Algorithmus zur Betrugserkennung aus folgenden Beziehungen besteht:

Gegeben seien die neue Beobachtung X und die Quantile $Q^{i}_{1-\alpha}$

a) Berechne die Hauptkomponententransformation

$$\widetilde{X} = T'(X - \mu)$$

b) Teste die Transformation auf

$$\widetilde{X}_i \leq Q^{i}_{1-\alpha}, i = 1,2$$

| | | | | |
|---|---|---|---|---|
| $\widetilde{X} > Q^{i}_{1-\alpha}$ | für ein i | $\Rightarrow$ | X ist ein Betrüger, | gehe zu c) |
| $\widetilde{X}_i \leq Q^{i}_{1-\alpha}$ | für ein i | $\Rightarrow$ | X ist Normalkunde | gehe zu d) |

c) Update des Erwartungswertes und der Kovarianzmatrix bei Betrügern

$$\bar{Y} \leftarrow \frac{nY + X}{n + 1}$$

$$R_b \leftarrow \frac{nR_b + (X - \bar{Y})(X - \bar{Y})'}{n + 1}$$

d) Update des Erwartungswertes und der Kovarianzmatrix bei Normalkunden

$$\bar{\mu} \leftarrow \frac{n\mu + X}{n + 1}$$

$$R_e \leftarrow \frac{nR_e + (X - \mu)(X - \mu)'}{n + 1}$$

**8.** Verfahren nach einem der Ansprüche 1-7, **dadurch gekennzeichnet, daß** die Betrüger-Erkennung durch die Fisher'sche Diskriminanzanalyse erfolgt.

## Claims

**1.** Method for identifying abuse of service provisions of the network operator by customers by means of on-line analysis of customer-related data sets with the following steps:

a) online detection of the input data sets from the network elements from the following components:

i) cumulative data sets over a fixed period of time;
ii) individual connection data of the latest period authorised by data protection law in days, comprising: destination directory number, length of call, type of connection;
iii) customer-specific data;

b) accumulation of the input features according to classes: type of destination directory number, numbers of calls, types of calls;
c) performing main component analysis:

i) performing a main component analysis on data sets of already identified defrauders;
ii) spectral analysis of the associated covariance matrix;
iii) determining the relevant main components;
iiii) classification of the relevant main components for fraudulent behaviour;

d) main component transformation of the non-detected data sets on the basis of the spectral analysis of the covariance matrix in step c);
e) representation of the main components of data sets and discrimination relating to the fraudulent behaviour;
f) estimation and determination of the empirical quantiles of the main components for controlling the error probabilities of first and second type with automatic detection and alarm generation;
g) Fisher's discrimination analysis to determine a dividing hyperplane between data sets of identified defauders and normal customers with graphic representation;
h) estimating and determining the empirical quantiles of the projected data for controlling the error probabilities of first and second type with automatic detection and alarm generation.

**2.** Method according to claim 1, **characterised in that** in method step b) each data set is represented from accumulated data by a high-dimensional real vector.

**3.** Method according to claim 1 or 2, **characterised in that** in method step e) the main components of the data sets are graphically represented.

4. Method according to one of claims 1 to 3, **characterised in that** in method step e) the fraudulent behaviour determined is visually represented.

5. Method according to one of claims 1 to 4, **characterised in that** the data sets of users are analysed according to their call features and divided into allocated classes and the division into classes is done using the behaviour distinguishing a particular group of subscribers with intention to defraud and differing significantly from the individual behaviour of the remaining subscribers.

6. Method according to one of claims 1 to 5, **characterised in that** the behaviour of customers with intention to defraud is **characterised by** the following two features

a) abuse of 0190 numbers and simultaneously
b) making a noticeably large number of calls abroad in the period of the investigation.

7. Method according to one of claims 1 to 6, **characterised in that** an algorithm for identifying fraud consists of the following relations:

Let the new observation be X and the quantiles $Q^i_{1-\alpha}$

a) calculate the main component transformation

$$\tilde{X} = \Gamma'(X - \mu)$$

b) Test the transformation with

$$\tilde{X}_i \leq Q^i_{1-\alpha}, i = 1,2$$

$$\tilde{X} > Q^i_{1-\alpha}$$

$\tilde{X}_i > Q^i_{1-\alpha}$ for one i ⇒ X is a defrauder, go to c)
$\tilde{X}_i \leq Q^i_{1-\alpha}$ for one i ⇒ X is a normal customer, go to d)

c) update the expected value and the covariance matrix in the case of defrauders

$$\bar{Y} \leftarrow \frac{nY + X}{n + 1}$$

$$R_b \leftarrow \frac{nRb + (X - \bar{Y})(X - \bar{Y})'}{n + 1}$$

$$\bar{\mu} \leftarrow \frac{n\mu + X}{n + 1}$$

$$R_e \leftarrow \frac{nR_e + (X - \mu)(X - \mu)'}{n + 1}$$

8. Method according to one of claims 1 to 7, **characterised in that** the identification of defrauders is done by Fisher's discrimination analysis.

## Revendications

**1.** Procédé pour détecter un emploi abusif de services de l'exploitant de réseau, de la part de clients, grâce à l'analyse en ligne d'ensembles de données relatifs aux clients, comprenant les étapes suivantes :

a) enregistrement en ligne des ensembles de données d'entrée provenant des éléments du réseau et formés des composants suivants :

i) ensembles de données cumulés sur une période fixe ;
ii) données de liaison individuelles de la dernière durée autorisée par la protection des données, en jours, comprenant : numéro d'appel d'arrivée, durée de l'appel, type de la liaison ;
iii) données propres au client ;

b) accumulation des caractéristiques d'entrée, par catégories : type de numéro d'appel d'arrivée, nombres d'appels, types d'appels ;
c) exécution de l'analyse des composants principaux :

i) exécution d'une analyse des composants principaux sur des ensembles de données de fraudeurs déjà identifiés ;
ii) décomposition spectrale de la matrice de covariance correspondante ;
iii) classification des composants principaux importants pour le comportement frauduleux ;

d) transformation de composants principaux des ensembles de données non détectés, sur la base de la décomposition spectrale de la matrice de covariance dans l'étape c) ;
e) représentation des composants principaux d'ensembles de données et discrimination par rapport au comportement frauduleux ;
f) évaluation et recherche des quantiles empiriques des composants principaux pour contrôler les probabilités d'erreur de premier et de deuxième type lors d'une détection et d'une alerte automatiques ;
g) analyse discriminante de Fischer pour définir un hyperplan de séparation entre les ensembles de données de fraudeurs identifiés et de clients normaux, avec une représentation graphique ;
h) évaluation et recherche des quantiles empiriques des données projetées, pour contrôler les probabilités d'erreur du premier et du deuxième type lors d'une détection et d'une alerte automatiques.

**2.** Procédé selon la revendication 1, **caractérisé en ce que** lors de l'étape de procédé b), chaque ensemble de données composé de données accumulées est représenté par un vecteur réel à dimensions élevées.

**3.** Procédé selon la revendication 1 ou 2, **caractérisé en ce que** lors de l'étape de procédé e), les composants principaux des ensembles de données sont représentés graphiquement.

**4.** Procédé selon l'une des revendications 1 à 3, **caractérisé en ce que** lors de l'étape de procédé e), le comportement frauduleux déterminé est représenté visuellement.

**5.** Procédé selon l'une des revendications 1 à 4, **caractérisé en ce que** les ensembles de données des utilisateurs sont analysés d'après leurs caractéristiques d'appels et sont classés en catégories correspondantes, et **en ce que** le classement en catégories se fait à l'aide du comportement qui caractérise un groupe défini d'abonnés avec des intentions frauduleuses et qui se distingue nettement du comportement individuel des autres abonnés.

**6.** Procédé selon l'une des revendications 1 à 5, **caractérisé en ce que** le comportement de clients avec des intentions frauduleuses est **caractérisé par** les deux spécificités suivantes :

a) utilisation abusive de numéros à tarif spécial 0190 et en même temps
b) nombre manifestement élevé d'appels à l'étranger dans la période examinée.

**7.** Procédé selon l'une des revendications 1 à 6, **caractérisé en ce qu'**un algorithme pour détecter la fraude se compose des rapports suivants :

soient la nouvelle observation X et les quantiles $Q^i_{1-\alpha}$

a) calculer la transformation de composants principaux

$$\tilde{X}=T'(X-\mu)$$

b) tester la transformation

$$\tilde{X}_i \leq Q^i_{1-} ,i = 1,2$$

$\tilde{X}_i > Q^i_{1-\alpha}$ pour un i ⇒ X est un fraudeur, aller à c)

$$\tilde{X}_i \leq Q^i_{1-} ,$$

$\tilde{X}_i$ pour un i ⇒ X est un client normal, aller à d)

c) actualiser la valeur attendue et la matrice de covariance dans le cas de fraudeurs

$$\bar{Y} \leftarrow \frac{nY+X}{n+1}$$

$$R_b \leftarrow \frac{nR_b+(X-\bar{Y})(X-\bar{Y})'}{n+1}$$

d) actualiser la valeur attendue et la matrice de covariance dans le cas de clients normaux

$$\bar{\mu} \leftarrow \frac{n\mu+X}{n+1}$$

$$R_e \leftarrow \frac{nR_e+(X-\mu)(X-\mu)'}{n+1}$$

**8.** Procédé selon l'une des revendications 1 à 7, **caractérisé en ce que** la détection de fraudeurs se fait grâce à une analyse de discrimination de Fischer.

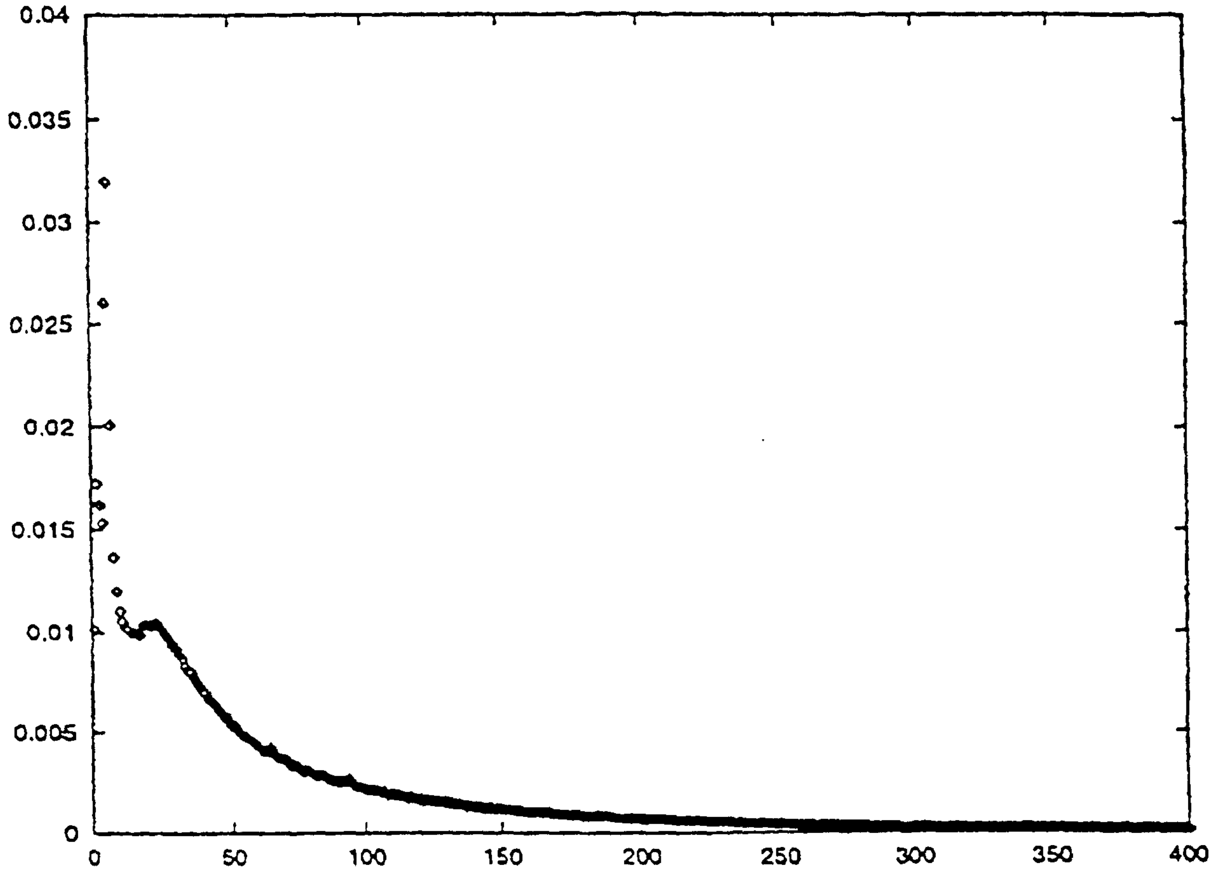
0.04
0.035
0.03
0.025
0.02
0.015
0.01
0.005
0
0
50
100
150
200
250
300
350
400

FIG. 1

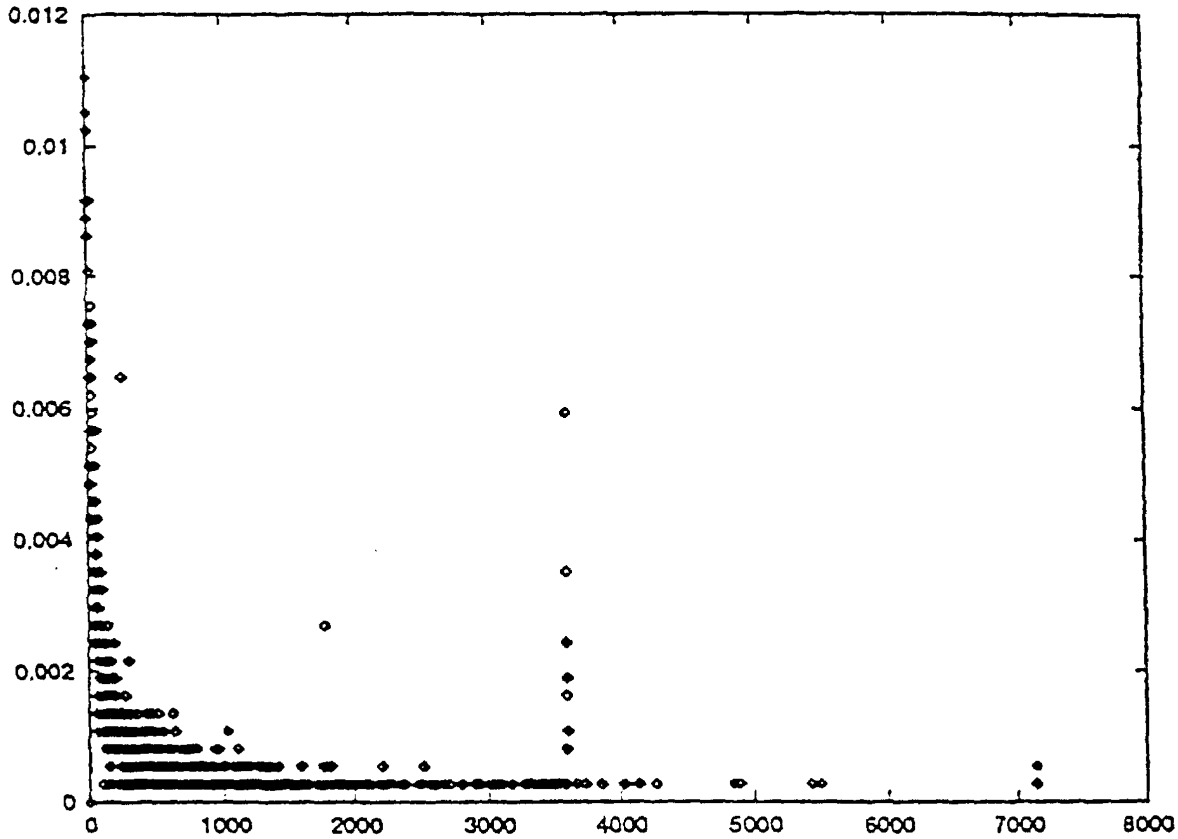
0.012
0.01
0.008
0.006
0.004
0.002
0
0
1000
2000
3000
4000
5000
6000
7000
8000

FIG. 2

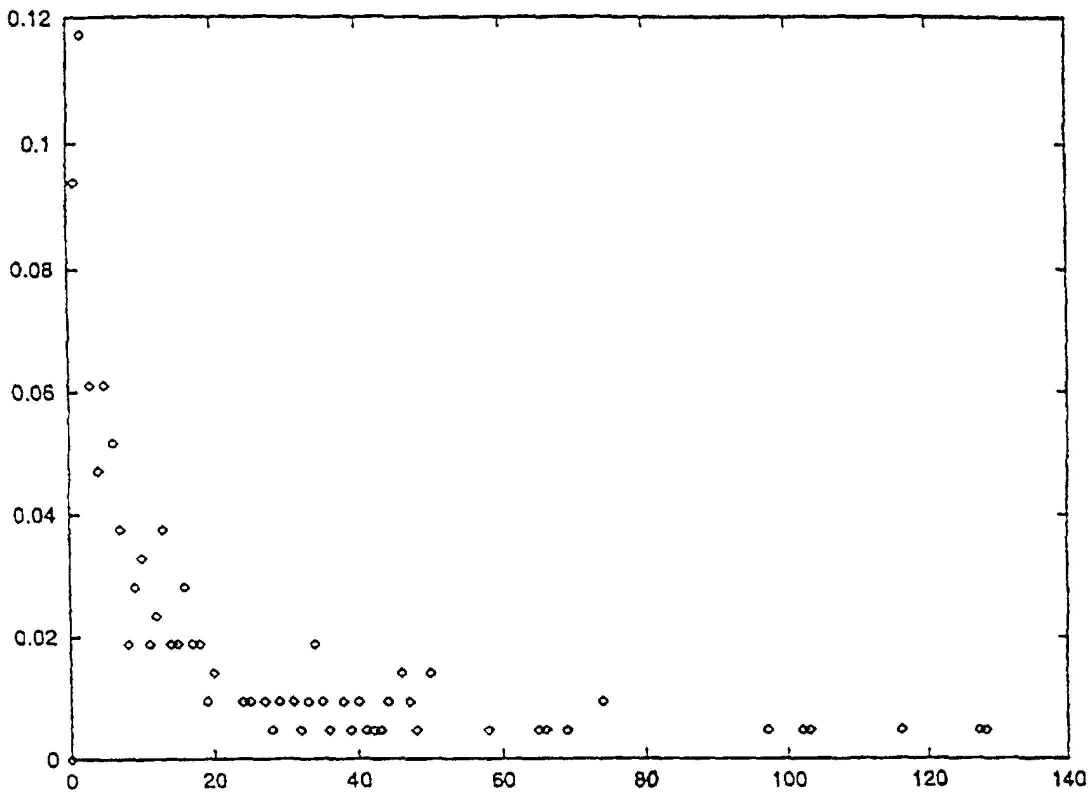


Fig. 3

| Zielkategorie | Anzahl | relative Häufigkeit |
|---|---|---|
| 0177-Nummer(E-Plus) | 21757 | 0.015633 |
| 0171-Nummer(D1) | 229594 | 0.164969 |
| 0172-Nummer(D2) | 76415 | 0.054906 |
| 0130-Nummer | 0 | 0.000000 |
| 0180-Nummer | 2235 | 0.001606 |
| 0190-Nummer | 3119 | 0.002241 |
| 2-Servicenummer | 14577 | 0.010474 |
| 3-Servicenummer | 159703 | 0.114751 |
| sonst.-Nummer(nat.) | 631715 | 0.453903 |
| roaming-Verbindungen | 35452 | 0.025473 |
| MTC(Flag:2/2+4) | 125321 | 0.090046 |
| MTC+(int)+(roaming) | 35457 | 0.025477 |
| Fax-Anrufe | 0 | 0.000000 |
| internat.Verbindungen | 56394 | 0.040521 |

Fig. 4

| Vorwahl | Anzahl | RH | Vorwahl | Anzahl | RH |
|---|---|---|---|---|---|
| 004175 | 22 | 0.000016 | 003393 | 11 | 0.000008 |
| 001809 | 8 | 0.000006 | 001787 | 1 | 0.000001 |
| 001441 | 6 | 0.000004 | 001345 | 4 | 0.000003 |
| 001246 | 2 | 0.000001 | 00994 | 2 | 0.000001 |
| 00974 | 1 | 0.000001 | 00973 | 3 | 0.000002 |
| 00972 | 92 | 0.000066 | 00971 | 20 | 0.000014 |
| 00966 | 47 | 0.000034 | 00965 | 14 | 0.000010 |
| 00964 | 2 | 0.000001 | 00963 | 35 | 0.000025 |
| 00962 | 42 | 0.000030 | 00961 | 114 | 0.000082 |
| 00960 | 2 | 0.000001 | 00886 | 14 | 0.000010 |
| 00880 | 5 | 0.000004 | 00874 | 2 | 0.000001 |
| 00856 | 1 | 0.000001 | 00855 | 1 | 0.000001 |
| 00853 | 4 | 0.000003 | 00852 | 30 | 0.000022 |
| 00677 | 47 | 0.000034 | 00599 | 290 | 0.000208 |
| 00594 | 1 | 0.000001 | 00593 | 2 | 0.000001 |
| 00592 | 5 | 0.000004 | 00591 | 1 | 0.000001 |
| 00507 | 3 | 0.000002 | 00506 | 4 | 0.000003 |
| 00502 | 2 | 0.000001 | 00421 | 77 | 0.000055 |
| 00420 | 678 | 0.000487 | 00396 | 13 | 0.000009 |
| 00389 | 76 | 0.000055 | 00387 | 260 | 0.000187 |
| 00386 | 161 | 0.000116 | 00385 | 454 | 0.000326 |

Fig. 5a

| Vorwahl | Anzahl | RH | Vorwahl | Anzahl | RH |
|---|---|---|---|---|---|
| 00381 | 432 | 0.000310 | 00380 | 177 | 0.000127 |
| 00378 | 2 | 0.000001 | 00375 | 182 | 0.000131 |
| 00374 | 16 | 0.000011 | 00373 | 15 | 0.000011 |
| 00372 | 25 | 0.000018 | 00371 | 62 | 0.000045 |
| 00370 | 120 | 0.000086 | 00359 | 78 | 0.000056 |
| 00358 | 150 | 0.000108 | 00357 | 22 | 0.000016 |
| 00356 | 43 | 0.000031 | 00355 | 11 | 0.000008 |
| 00354 | 1 | 0.000001 | 00353 | 52 | 0.000037 |
| 00352 | 197 | 0.000142 | 00351 | 265 | 0.000190 |
| 00350 | 1 | 0.000001 | 00299 | 4 | 0.000003 |
| 00264 | 11 | 0.000008 | 00263 | 2 | 0.000001 |
| 00262 | 3 | 0.000002 | 00258 | 2 | 0.000001 |
| 00256 | 2 | 0.000001 | 00254 | 17 | 0.000012 |
| 00251 | 2 | 0.000001 | 00249 | 79 | 0.000057 |
| 00248 | 4 | 0.000003 | 00245 | 12 | 0.000009 |
| 00244 | 3 | 0.000002 | 00243 | 4 | 0.000003 |
| 00241 | 12 | 0.000009 | 00239 | 64 | 0.000046 |
| 00237 | 7 | 0.000005 | 00234 | 34 | 0.000024 |
| 00233 | 42 | 0.000030 | 00232 | 1 | 0.000001 |
| 00229 | 2 | 0.000001 | 00228 | 7 | 0.000005 |
| 00225 | 8 | 0.000006 | 00224 | 1 | 0.000001 |
| 00223 | 15 | 0.000011 | 00221 | 7 | 0.000005 |
| 00220 | 13 | 0.000009 | 00218 | 2 | 0.000001 |
| 00216 | 48 | 0.000034 | 00213 | 30 | 0.000022 |
| 00212 | 82 | 0.000059 | 0098 | 58 | 0.000042 |
| 0094 | 806 | 0.000579 | 0093 | 14 | 0.000010 |
| 0092 | 24 | 0.000017 | 0091 | 81 | 0.000058 |
| 0090 | 1305 | 0.000938 | 0086 | 70 | 0.000050 |
| 0084 | 189 | 0.000136 | 0082 | 36 | 0.000026 |
| 0081 | 188 | 0.000135 | 0066 | 57 | 0.000041 |
| 0065 | 32 | 0.000023 | 0064 | 5 | 0.000004 |
| 0063 | 35 | 0.000025 | 0062 | 27 | 0.000019 |
| 0061 | 45 | 0.000032 | 0060 | 23 | 0.000017 |
| 0058 | 6 | 0.000004 | 0057 | 20 | 0.000014 |
| 0056 | 35 | 0.000025 | 0055 | 51 | 0.000037 |

Fig. 5b

| Zielkategorie | Anzahl | relative Häufigkeit |
|---|---|---|
| 0177-Nummer(E-Plus) | 228 | 0.007291 |
| 0171-Nummer(D1) | 8926 | 0.285449 |
| 0172-Nummer(D2) | 1461 | 0.046722 |
| 0130-Nummer | 0 | 0.000000 |
| 0180-Nummer | 19 | 0.000608 |
| 0190-Nummer | 0 | 0.000000 |
| 2-Servicenummer | 0 | 0.000000 |
| 3-Servicenummer | 0 | 0.000000 |
| sonst.-Nummer(nat.) | 20636 | 0.659930 |

Fig. 7

| Vorwahl | Anzahl | RH | Vorwahl | Anzahl | RH |
|---|---|---|---|---|---|
| 0054 | 16 | 0.000011 | 0053 | 3 | 0.000002 |
| 0052 | 10 | 0.000007 | 0051 | 8 | 0.000006 |
| 0049 | 31270 | 0.022468 | 0048 | 1674 | 0.001203 |
| 0047 | 121 | 0.000087 | 0046 | 317 | 0.000228 |
| 0045 | 329 | 0.000236 | 0044 | 1317 | 0.000946 |
| 0043 | 2449 | 0.001760 | 0041 | 1490 | 0.001071 |
| 0040 | 278 | 0.000200 | 0039 | 1700 | 0.001221 |
| 0036 | 323 | 0.000232 | 0034 | 775 | 0.000557 |
| 0033 | 1254 | 0.000901 | 0032 | 783 | 0.000563 |
| 0031 | 1711 | 0.001229 | 0030 | 416 | 0.000299 |
| 0027 | 52 | 0.000037 | 0020 | 74 | 0.000053 |
| 007 | 504 | 0.000362 | 001 | 1483 | 0.001066 |

Fig. 6

| Zielkategorie | Anzahl | relative Häufigkeit |
|---|---|---|
| 0177-Nummer(E-Plus) | 56 | 0.015102 |
| 0171-Nummer(D1) | 268 | 0.072276 |
| 0172-Nummer(D2) | 139 | 0.037487 |
| 0130-Nummer | 0 | 0.000000 |
| 0180-Nummer | 3 | 0.000809 |
| 0190-Nummer | 638 | 0.172060 |
| 2-Servicenummer | 58 | 0.015642 |
| 3-Servicenummer | 73 | 0.019687 |
| sonst.-Nummer(nat.) | 652 | 0.175836 |
| roaming-Verbindungen | 29 | 0.007821 |
| MTC(Flag:2/2+4) | 5 | 0.001348 |
| MTC+(int)+(roaming) | 4 | 0.001079 |
| Fax-Anrufe | 0 | 0.000000 |
| internat.Verbindungen | 1764 | 0.475728 |

Fig. 8

| Vorwahl | Anzahl | RH | Vorwahl | Anzahl | RH |
|---|---|---|---|---|---|
| 001809 | 18 | 0.004854 | 00977 | 27 | 0.007282 |
| 00974 | 2 | 0.000539 | 00971 | 14 | 0.003776 |
| 00966 | 1 | 0.000270 | 00965 | 1 | 0.000270 |
| 00964 | 3 | 0.000809 | 00963 | 1 | 0.000270 |
| 00962 | 1 | 0.000270 | 00961 | 68 | 0.018339 |
| 00873 | 9 | 0.002427 | 00852 | 2 | 0.000539 |
| 00677 | 2 | 0.000539 | 00599 | 64 | 0.017260 |
| 00593 | 44 | 0.011866 | 00591 | 1 | 0.000270 |
| 00420 | 3 | 0.000809 | 00389 | 5 | 0.001348 |
| 00387 | 10 | 0.002697 | 00386 | 1 | 0.000270 |
| 00385 | 2 | 0.000539 | 00381 | 160 | 0.043150 |
| 00380 | 1 | 0.000270 | 00375 | 1 | 0.000270 |
| 00374 | 48 | 0.012945 | 00373 | 4 | 0.001079 |
| 00371 | 1 | 0.000270 | 00359 | 1 | 0.000270 |
| 00355 | 21 | 0.005663 | 00351 | 3 | 0.000809 |
| 00258 | 2 | 0.000539 | 00254 | 2 | 0.000539 |
| 00251 | 11 | 0.002967 | 00245 | 1 | 0.000270 |
| 00244 | 1 | 0.000270 | 00243 | 3 | 0.000809 |
| 00241 | 4 | 0.001079 | 00239 | 1 | 0.000270 |
| 00237 | 10 | 0.002697 | 00234 | 57 | 0.015372 |
| 00233 | 37 | 0.009978 | 00232 | 9 | 0.002427 |

Fig. 9

| Vorwahl | Anzahl | RH | Vorwahl | Anzahl | RH |
|---|---|---|---|---|---|
| 00229 | 10 | 0.002697 | 00228 | 91 | 0.024542 |
| 00227 | 5 | 0.001348 | 00226 | 35 | 0.009439 |
| 00225 | 34 | 0.009169 | 00224 | 108 | 0.029126 |
| 00223 | 14 | 0.003776 | 00221 | 10 | 0.002697 |
| 00220 | 29 | 0.007821 | 00213 | 1 | 0.000270 |
| 00212 | 2 | 0.000539 | 0098 | 44 | 0.011866 |
| 0094 | 19 | 0.005124 | 0092 | 59 | 0.015912 |
| 0091 | 58 | 0.015642 | 0090 | 80 | 0.021575 |
| 0084 | 19 | 0.005124 | 0081 | 8 | 0.002157 |
| 0066 | 1 | 0.000270 | 0065 | 25 | 0.006742 |
| 0061 | 1 | 0.000270 | 0060 | 1 | 0.000270 |
| 0058 | 3 | 0.000809 | 0057 | 67 | 0.018069 |
| 0054 | 1 | 0.000270 | 0049 | 48 | 0.012945 |
| 0048 | 1 | 0.000270 | 0046 | 9 | 0.002427 |
| 0045 | 1 | 0.000270 | 0044 | 14 | 0.003776 |
| 0043 | 4 | 0.001079 | 0041 | 5 | 0.001348 |
| 0039 | 34 | 0.009169 | 0036 | 10 | 0.002697 |
| 0034 | 10 | 0.002697 | 0033 | 33 | 0.008900 |
| 0032 | 12 | 0.003236 | 0031 | 11 | 0.002967 |
| 0030 | 8 | 0.002157 | 0027 | 1 | 0.000270 |
| 0020 | 126 | 0.033981 | 007 | 6 | 0.001618 |
| 001 | 49 | 0.013215 | | | |

Fig. 10

| Zielkategorie | Anzahl | relative Häufigkeit |
|---|---|---|
| 0177-Nummer(E-Plus) | 0 | 0.000000 |
| 0171-Nummer(D1) | 33 | 0.687500 |
| 0172-Nummer(D2) | 0 | 0.000000 |
| 0130-Nummer | 0 | 0.000000 |
| 0180-Nummer | 0 | 0.000000 |
| 0190-Nummer | 0 | 0.000000 |
| 2-Servicenummer | 0 | 0.000000 |
| 3-Servicenummer | 0 | 0.000000 |
| sonst.-Nummer(nat.) | 15 | 0.312500 |

Fig. 11

| Gesprächsdauerverteilungen: empirische Werte, Normalkunden | | | |
|---|---|---|---|
| | Mittelwert | Varianz | Anz. Beob. |
| P(D = x) | 89.031 | 33500.2 | 1347987 |
| P(D = x , Z = "0171") | 88.9203 | 29766.6 | 224455 |
| P(D = x , Z = "0172") | 86.9104 | 27975.3 | 74341 |
| P(D = x , Z = "0177") | 68.9554 | 32455.2 | 21234 |
| P(D = x , Z = "0180") | 109.505 | 35386.2 | 2182 |
| P(D = x , Z = "0190") | 240.873 | 172160 | 2990 |
| P(D = x , Z = "Ausland") | 161.723 | 75721.4 | 51968 |
| P(D = x , Z = "nat. Nummer") | 110.289 | 39925 | 614483 |
| P(D = x , Z = "roaming") | 129.4 | 48994.2 | 31099 |
| P(D = x , Z = "Service") | 33.2223 | 3412.86 | 170192 |
| P(D = x , Z = "MTC") | 34.2888 | 18491 | 155043 |

Fig. 12

| Gesprächsdauerverteilungen: empirische Werte, Betrüger | | | |
|---|---|---|---|
| | Mittelwert | Varianz | Anz. Beob. |
| P(D = x) | 419.614 | 570437 | 3708 |
| P(D = x , Z = "0171") | 98.7649 | 39801.6 | 268 |
| P(D = x , Z = "0172") | 75.2662 | 12325 | 139 |
| P(D = x , Z = "0177") | 94.0893 | 29788.3 | 56 |
| P(D = x , Z = "0180") | 79.3333 | 4076.33 | 3 |
| P(D = x , Z = "0190") | 955.9 | 1492920 | 638 |
| P(D = x , Z = "Ausland") | 441.524 | 398170 | 1764 |
| P(D = x , Z = "nat. Nummer") | 162.245 | 226634 | 652 |
| P(D = x , Z = "roaming") | 94.931 | 11477.6 | 29 |
| P(D = x , Z = "Service") | 72.7176 | 10024.1 | 131 |
| P(D = x , Z = "MTC") | 239.786 | 33575.8 | 28 |

Fig. 13

| Anrufe pro Tag: empirische Werte, Normalkunden | | | |
|---|---|---|---|
| | Mittelwert | Varianz | Anz. Beob. |
| P(N = n) | 3.60083 | 19.6097 | 278679 |
| P(N = n , Z = "0171") | 2.27225 | 7.01537 | 79865 |
| P(N = n , Z = "0172") | 1.81821 | 2.861 | 32318 |
| P(N = n , Z = "0177") | 1.76592 | 3.36558 | 9326 |
| P(N = n , Z = "0180") | 1.61302 | 3.89941 | 1137 |
| P(N = n , Z = "0190") | 2.24923 | 7.26093 | 979 |
| P(N = n , Z = "Ausland") | 2.4757 | 9.0543 | 15842 |
| P(N = n , Z = "nat. Nummer") | 2.66706 | 8.30287 | 191501 |
| P(N = n , Z = "roaming") | 3.014 | 14.922 | 7645 |
| P(N = n , Z = "Service") | 1.73214 | 1.96642 | 80411 |
| P(N = n , Z = "MTC") | 2.31401 | 9.35516 | 13162 |

Fig. 14

| Anrufe pro Tag: empirische Werte, Betrüger | | | |
|---|---|---|---|
| | Mittelwert | Varianz | Anz. Beob. |
| P(N = n) | 17.4085 | 517.762 | 213 |
| P(N = n , Z = "0171") | 3.72222 | 14.7668 | 72 |
| P(N = n , Z = "0172") | 2.57407 | 4.62648 | 54 |
| P(N = n , Z = "0177") | 2.54545 | 3.68831 | 22 |
| P(N = n , Z = "0180") | 1.5 | 0.5 | 2 |
| P(N = n , Z = "0190") | 9.11429 | 89.436 | 70 |
| P(N = n , Z = "Ausland") | 19.6 | 770.625 | 90 |
| P(N = n , Z = "nat. Nummer") | 4.72464 | 34.055 | 138 |
| P(N = n , Z = "roaming") | 4.83333 | 26.9667 | 6 |
| P(N = n , Z = "Service") | 2.25862 | 3.6337 | 58 |
| P(N = n , Z = "MTC") | 3.11111 | 35.6111 | 9 |

Fig. 15

| Umsatzverteilung: empirische Werte, Normalkunden | | | |
|---|---|---|---|
| | Mittelwert | Varianz | Anz. Beob. |
| P(C = y) | 50.8544 | 28729.6 | 1347987 |
| P(C = y , Z = "0171") | 29.8012 | 2438.51 | 224455 |
| P(C = y , Z = "0172") | 45.763 | 7093.21 | 74341 |
| P(C = y , Z = "0177") | 33.8373 | 6813.77 | 21234 |
| P(C = y , Z = "0180") | 54.6512 | 6565.22 | 2182 |
| P(C = y , Z = "0190") | 361.32 | 377399 | 2990 |
| P(C = y , Z = "Ausland") | 181.384 | 102244 | 51968 |

Fig. 16

| Umsatzverteilung: empirische Werte, Normalkunden | | | |
|---|---|---|---|
| P(C = y , Z = "nat. Nummer") | 56.4951 | 7643.19 | 614483 |
| P(C = y , Z = "roaming") | 169.512 | 121966 | 31099 |
| P(C = y , Z = "Service") | 12.9313 | 715.657 | 170192 |
| P(C = y , Z = "MTC") | 31.7846 | 131584 | 155043 |

Fig. 17

| Umsatzverteilung: empirische Werte, Betrüger | | | |
|---|---|---|---|
| | Mittelwert | Varianz | Anz. Beob. |
| P(C = y) | 674.278 | 2662240 | 3708 |
| P(C = y , Z = "0171") | 25.9254 | 2111.94 | 268 |
| P(C = y , Z = "0172") | 25.9353 | 1373.21 | 139 |
| P(C = y , Z = "0177") | 31.8571 | 4171.51 | 56 |
| P(C = y , Z = "0180") | 39.3333 | 702.333 | 3 |
| P(C = y , Z = "0190") | 1903.82 | 8094190 | 638 |
| P(C = y , Z = "Ausland") | 668.791 | 1239130 | 1764 |
| P(C = y , Z = "nat. Nummer") | 65.2255 | 15790.5 | 652 |
| P(C = y , Z = "roaming") | 127.31 | 13829.4 | 29 |
| P(C = y , Z = "Service") | 55.313 | 6653.39 | 131 |
| P(C = y , Z = "MTC") | 1425.5 | 38492800 | 28 |

Fig. 18

| Kontingenztafel für 1. Aug. 1989, Segment 28 | | | | | | | | | | | |
|---|---|---|---|---|---|---|---|---|---|---|---|
| | **0177** | **0171** | **0172** | **0130** | **0180** | **0190** | **2...** | **3...** | **int.** | **sonst.** | |
| **0177** | 57 | 22 | 4 | 0 | 1 | 0 | 1 | 3 | 1 | 58 | 147 |
| **0171** | 23 | 843 | 84 | 0 | 0 | 1 | 11 | 75 | 21 | 549 | 1607 |
| **0172** | 6 | 80 | 224 | 0 | 1 | 2 | 1 | 31 | 8 | 257 | 610 |
| **0130** | 0 | 0 | 0 | 0 | 0 | 0 | 0 | 0 | 0 | 0 | 0 |
| **0180** | 0 | 0 | 1 | 0 | 2 | 0 | 0 | 1 | 0 | 9 | 13 |
| **0190** | 1 | 1 | 0 | 0 | 0 | 15 | 0 | 1 | 0 | 8 | 26 |
| **2...** | 2 | 8 | 1 | 0 | 0 | 0 | 8 | 5 | 3 | 33 | 60 |
| **3...** | 14 | 137 | 58 | 0 | 1 | 0 | 3 | 355 | 14 | 487 | 1069 |
| **int.** | 1 | 22 | 11 | 0 | 1 | 0 | 2 | 9 | 248 | 130 | 424 |
| **sonst.** | 59 | 611 | 247 | 0 | 9 | 9 | 34 | 338 | 131 | 4034 | 5472 |
| | 163 | 1724 | 630 | 0 | 15 | 27 | 60 | 818 | 426 | 5565 | 9428 |
| Wert der Chi-Quadrat Teststatistik: 10905.5 | | | | | | | | | | | |

Fig. 19

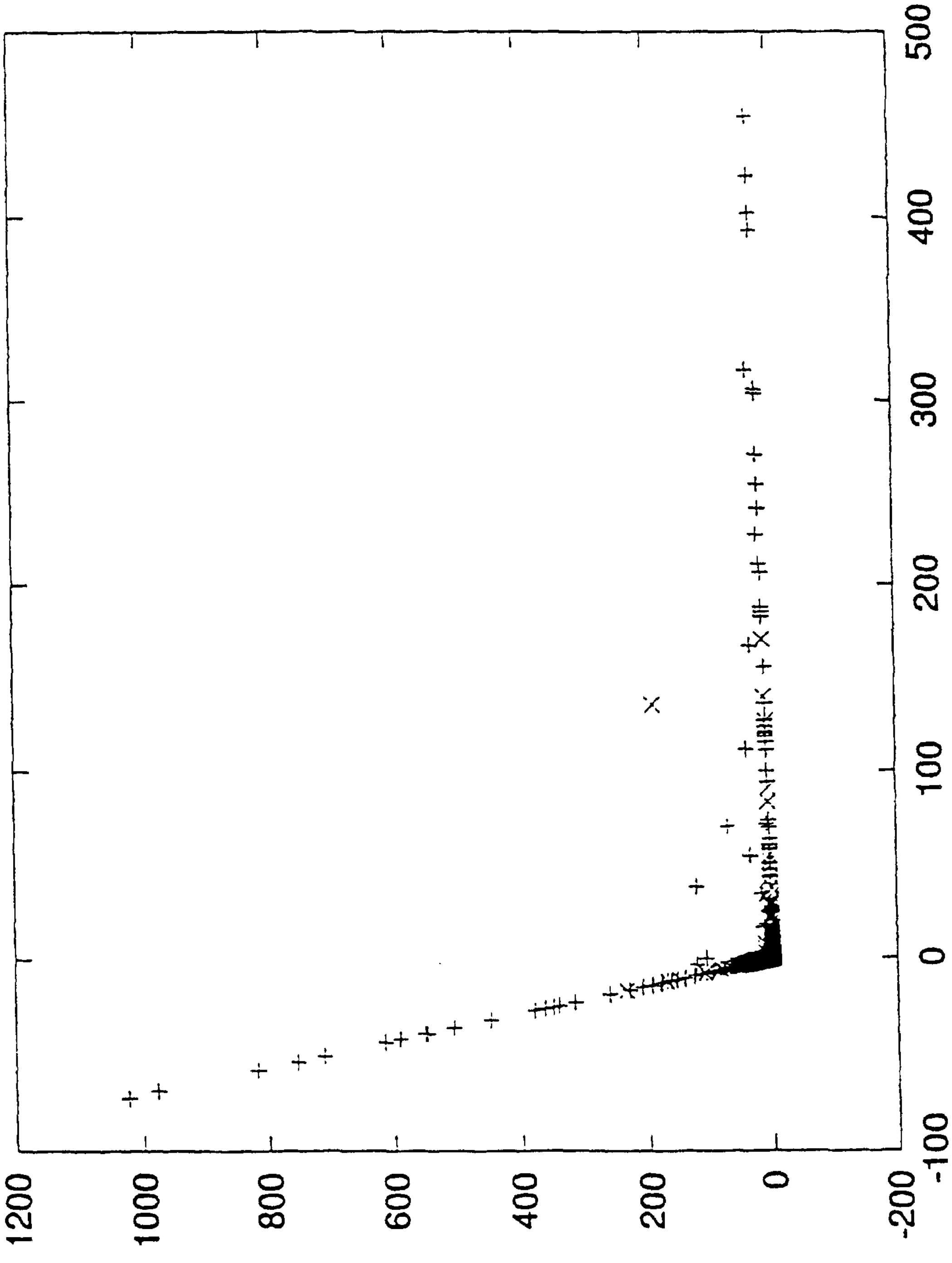


Fig. 20

Fig. 21

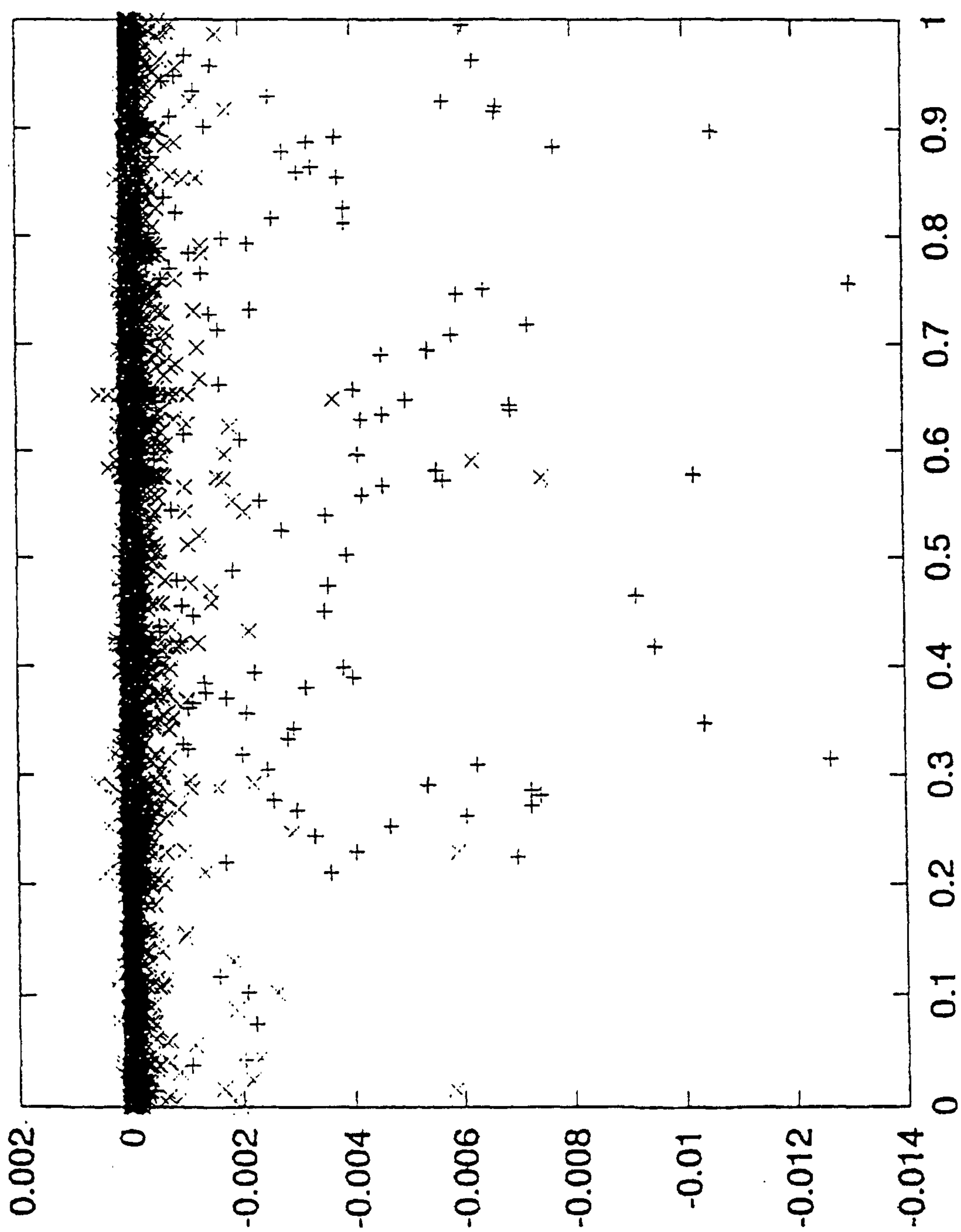
0.002
0
-0.002
-0.004
-0.006
-0.008
-0.01
-0.012
-0.014
0
0.1
0.2
0.3
0.4
0.5
0.6
0.7
0.8
0.9
1

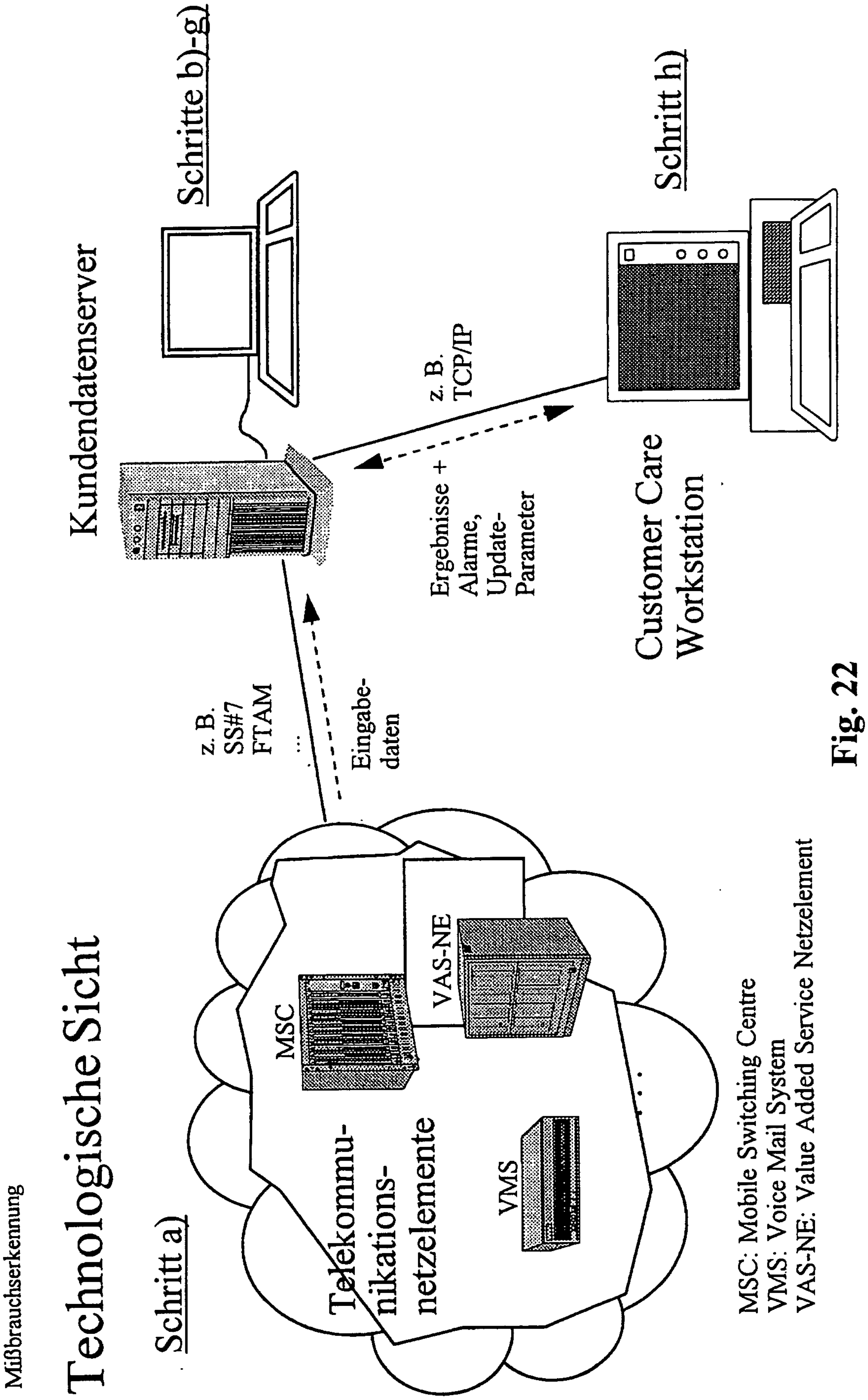
Mißbrauchserkennung
Technologische Sicht
Schritt a)
Telekommu-
nikations-
netzelemente
MSC
VAS-NE
VMS
z. B.
SS#7
FTAM
...
Eingabe-
daten
Kundendatenserver
Schritte b)-g)
Ergebnisse +
Alarme,
Update-
Parameter
z. B.
TCP/IP
Customer Care
Workstation
Schritt h)
MSC: Mobile Switching Centre
VMS: Voice Mail System
VAS-NE: Value Added Service Netzelement

Fig. 22

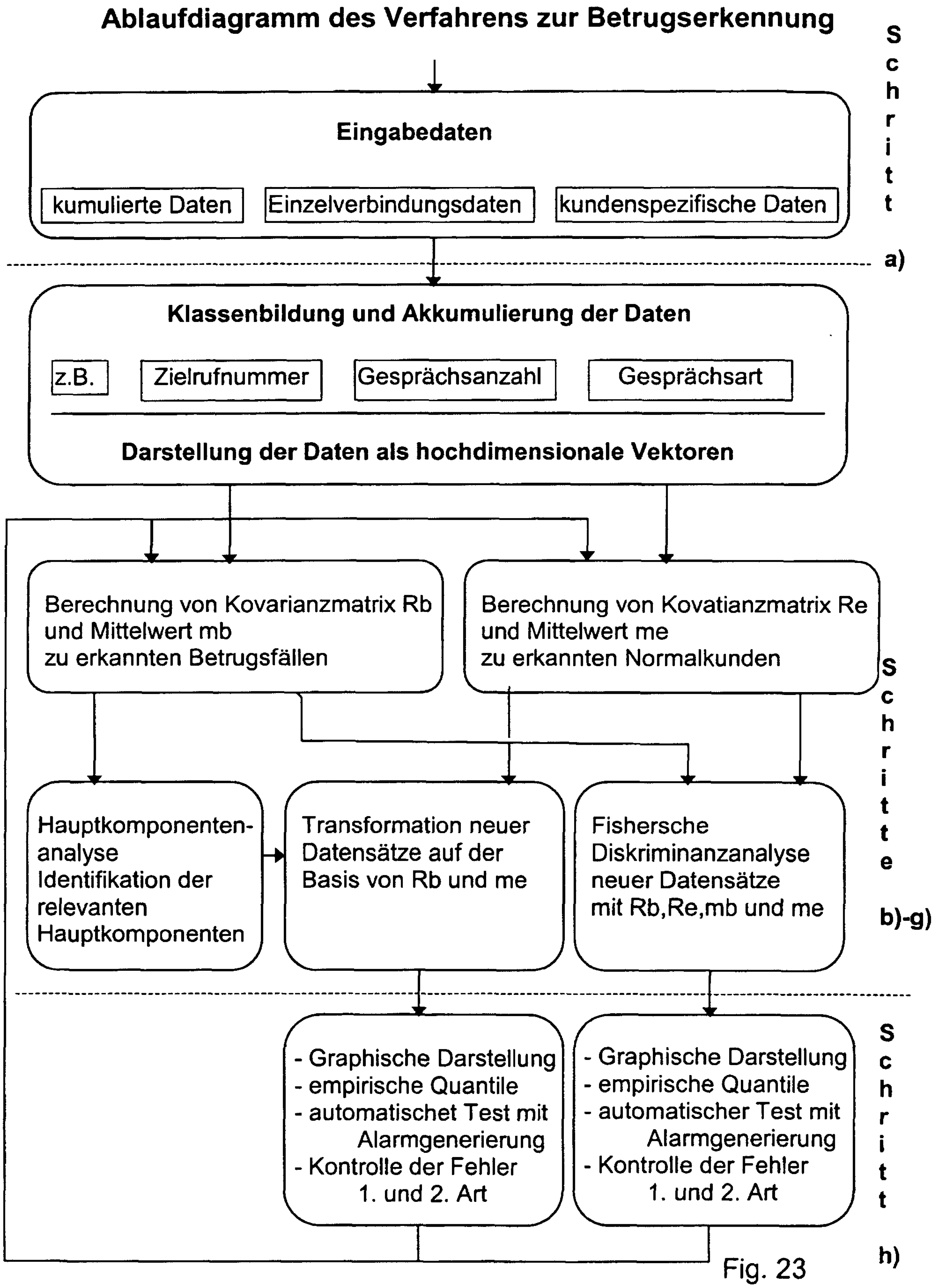
Ablaufdiagramm des Verfahrens zur Betrugserkennung
Schritt
a)
Eingabedaten
kumulierte Daten
Einzelverbindungsdaten
kundenspezifische Daten
Klassenbildung und Akkumulierung der Daten
z.B.
Zielrufnummer
Gesprächsanzahl
Gesprächsart
Darstellung der Daten als hochdimensionale Vektoren
Berechnung von Kovarianzmatrix Rb und Mittelwert mb zu erkannten Betrugsfällen
Berechnung von Kovatianzmatrix Re und Mittelwert me zu erkannten Normalkunden
Schritte
b)-g)
Hauptkomponenten-analyse Identifikation der relevanten Hauptkomponenten
Transformation neuer Datensätze auf der Basis von Rb und me
Fishersche Diskriminanzanalyse neuer Datensätze mit Rb,Re,mb und me
- Graphische Darstellung
- empirische Quantile
- automatischet Test mit Alarmgenerierung
- Kontrolle der Fehler 1. und 2. Art
- Graphische Darstellung
- empirische Quantile
- automatischer Test mit Alarmgenerierung
- Kontrolle der Fehler 1. und 2. Art
Schritt
h)

Fig. 23

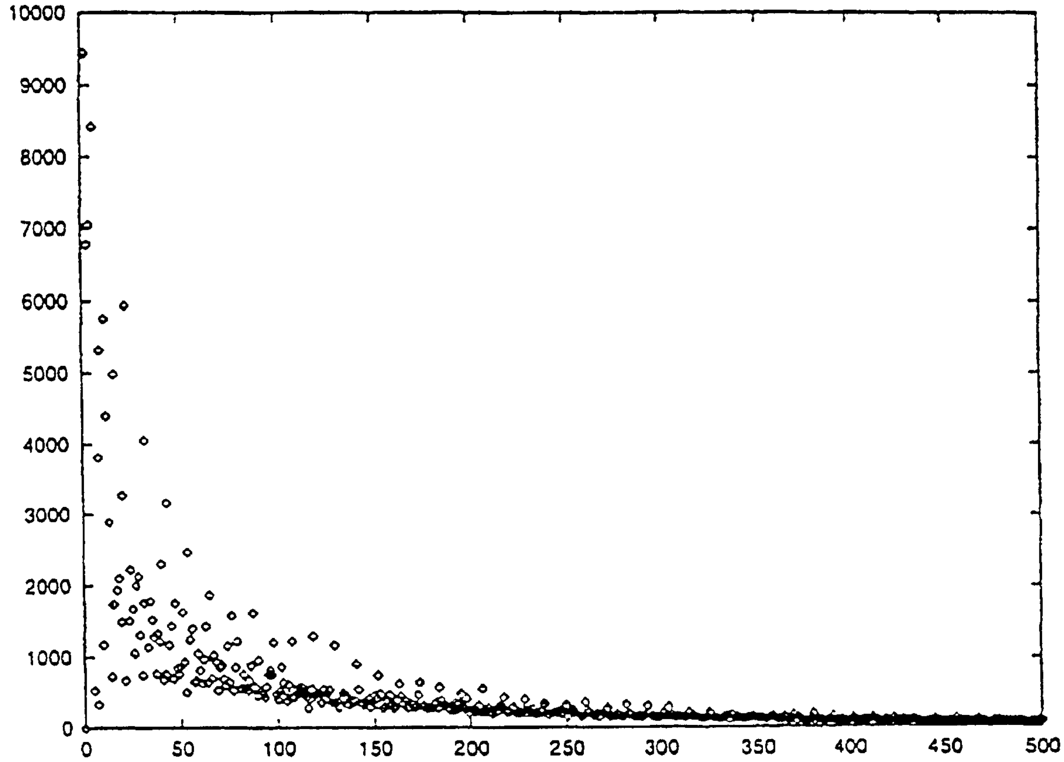
10000
9000
8000
7000
6000
5000
4000
3000
2000
1000
0
0
50
100
150
200
250
300
350
400
450
500

Fig. 24

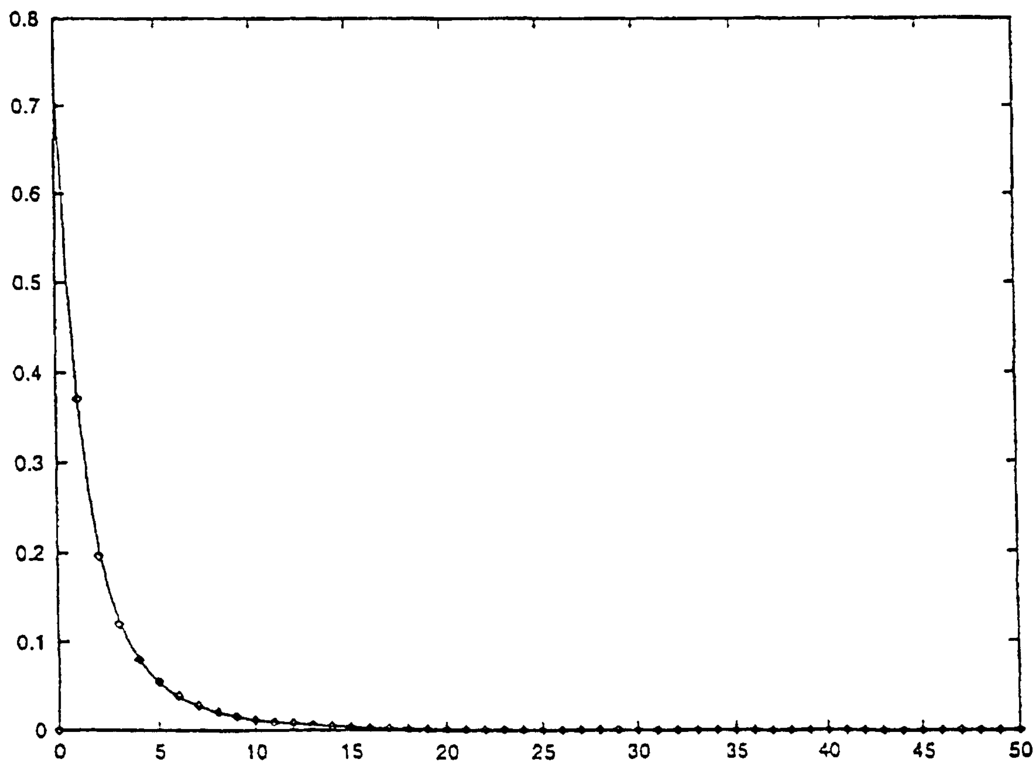
0.8
0.7
0.6
0.5
0.4
0.3
0.2
0.1
0
0
5
10
15
20
25
30
35
40
45
50

Fig.25

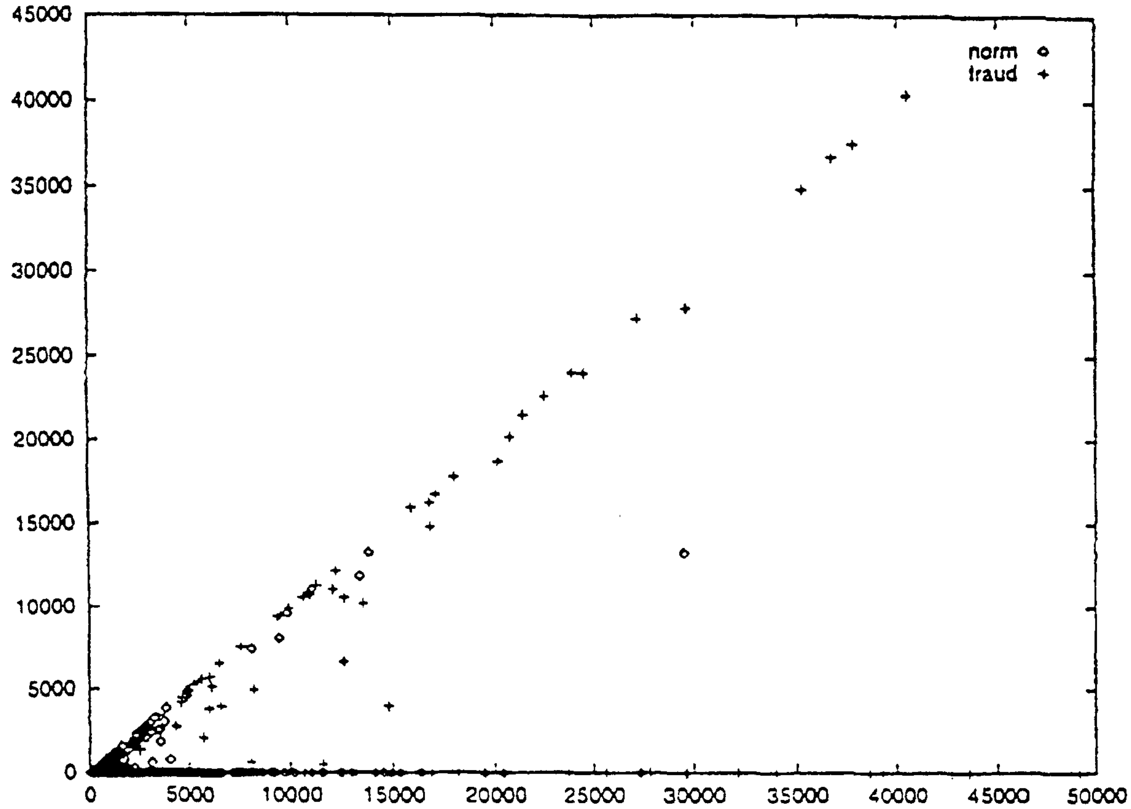
norm
fraud
45000
40000
35000
30000
25000
20000
15000
10000
5000
0
0
5000
10000
15000
20000
25000
30000
35000
40000
45000
50000

Fig. 26

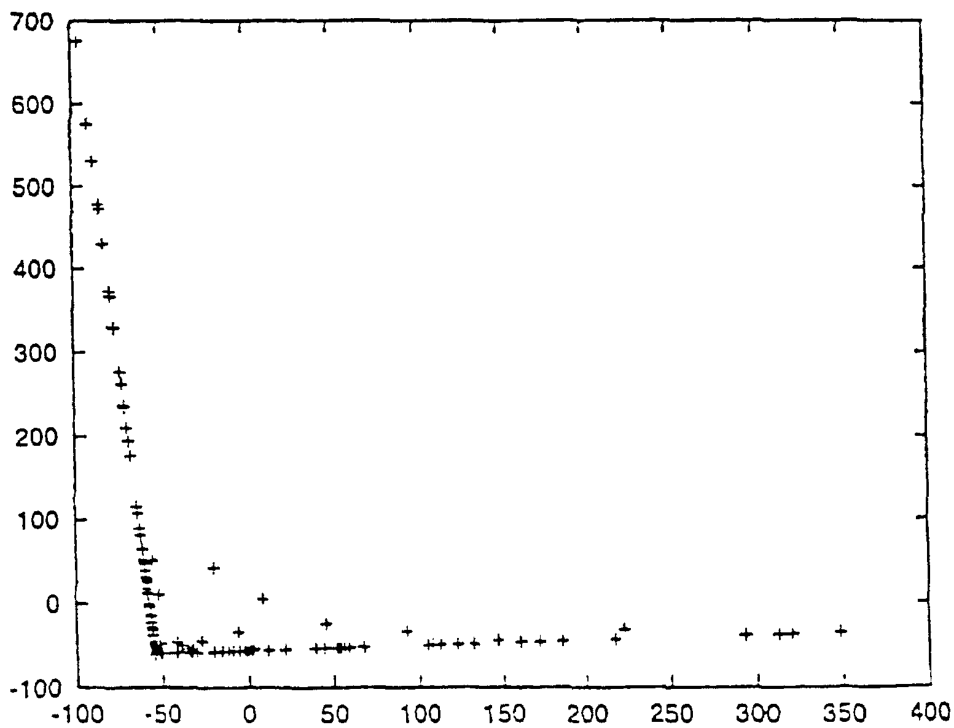
700
600
500
400
300
200
100
0
-100
-100
-50
0
50
100
150
200
250
300
350
400

Fig. 27

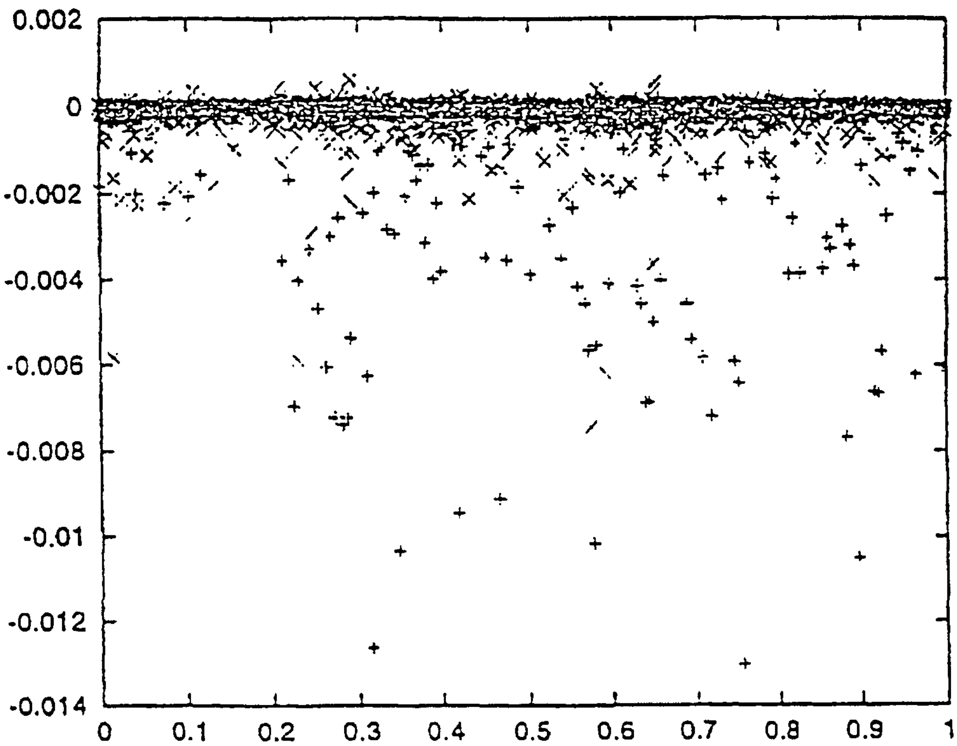
0.002
0
-0.002
-0.004
-0.006
-0.008
-0.01
-0.012
-0.014
0
0.1
0.2
0.3
0.4
0.5
0.6
0.7
0.8
0.9
1

Fig. 28